(19) Europäisches Patentamt / European Patent Office / Office européen des brevets

(11) **EP 3 034 995 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **14199215.6**

(22) Anmeldetag: **19.12.2014**

(51) Internationale Patentklassifikation (IPC):
**G01C 1/04** (2006.01)    **G01C 11/02** (2006.01)
**G01C 15/00** (2006.01)    **G06T 7/70** (2017.01)

(52) Gemeinsame Patentklassifikation (CPC):
**G01C 1/04; G01C 11/02; G01C 15/002; G06T 7/70**

(54) **VERFAHREN ZUM BESTIMMEN EINES POSITION- UND ORIENTIERUNGSVERSATZES EINES GEODÄTISCHEN VERMESSUNGSGERÄTS UND EBENSOLCHES VERMESSUNGSGERÄT**

METHOD FOR DETERMINING A POSITION AND ORIENTATION OFFSET OF A GEODETIC SURVEYING DEVICE AND CORRESPONDING MEASURING DEVICE

PROCÉDÉ DE DÉTERMINATION D'UN DÉCALAGE D'ORIENTATION OU DE POSITION D'UN APPAREIL DE MESURE GÉODÉSIQUE ET APPAREIL DE MESURE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016 Patentblatt 2016/25**

(73) Patentinhaber: **Leica Geosystems AG**
**9435 Heerbrugg (CH)**

(72) Erfinder:
• **Metzler, Bernhard**
**A-6850 Dornbirn (AT)**
• **Gächter Toya, Stefan Martin Benjamin**
**CH-9000 St. Gallen (CH)**

(74) Vertreter: **Kaminski Harmann**
**Patentanwälte AG**
**Landstrasse 124**
**9490 Vaduz (LI)**

(56) Entgegenhaltungen:
**EP-A1- 1 517 116      DE-A1- 10 308 525**
**US-A1- 2002 126 895**

**Beschreibung**

Die Erfindung betrifft ein Verfahren zum präzisen Bestimmten eine Positions- und Orientierungsversatzes für ein geodätisches Vermessungsgerät nach dem Oberbegriff des Anspruchs 1, ein ebensolches geodätisches Vermessungsgerät nach Anspruch 12 und ein ebensolches Computerprogrammprodukt nach Anspruch 13.

Für die Aufnahme von Eigenschaften definierter Punkte in einer Messumgebung, insbesondere von Daten mit räumlichem Bezug, ist seit der Antike eine Vielzahl von Messverfahren bekannt. Als räumliche Standarddaten werden dabei die Position und Ausrichtung eines Vermessungsgerätes sowie Richtung, Entfernung und Winkel zu Messpunkten aufgenommen. Ein allgemein bekanntes Beispiel für solche Vermessungsgeräte bzw. geodätische Geräte stellt der Theodolit bzw. eine Totalstation dar. Solche Geräte verfügen über Winkel- und Entfernungsmessfunktionen zur Richtungs- und Entfernungsbestimmung zu einem ausgewählten Ziel. Die Winkel- bzw. Distanzgrössen werden dabei im inneren Bezugssystem des Gerätes ermittelt. Für eine absolute Positionsbestimmung müssen diese Grössen noch mit einem äusseren, absoluten Bezugssystem verknüpft werden, wozu i.d.R. die genaue absolute Stationierung des Vermessungsgerätes, als die Position und Orientierung seines inneren Bezugssystems im äusseren Bezugssystem, als Grundlage dient.

Um die absolute d.h. georeferenzierte Stationierung des Vermessungsgerätes präzise zu ermitteln, können dessen Position und Orientierung als indirekte Geo-Referenzierung präzise aus geodätischen Messungen in der aktuellen Stationierung zu absolut referenzierten Zielpunkten berechnet werden. Geodätische Messungen sind Richtungs- und Entfernungsmessungen mittels der Winkel- und Entfernungsmessfunktionen des Vermessungsgeräts und die Zielpunkte sind in der Messumgebung des Vermessungsgeräts vorhandene, ortsfeste und eingemessene punktuelle Stellen, bspw. Kirchturmspitzen oder speziell für geodätische Vermessungen installierte Objekte, z.B. Zielmarkierungen auf einer Baustelle. Die Position und Orientierung werden berechnet aus der gemessenen Lage relativ zum inneren Bezugssystem von wenigstens drei Zielpunkten und deren bekannter absoluter Lage. Mit anderen Worten wird aus der Lage der Zielpunkte im inneren Bezugssystem des Vermessungsgeräts und im äusseren Bezugssystem die Transformation zwischen beiden Bezugssystemen bestimmt. Nachteilig an einem solchen Verfahren ist, dass die erforderlichen geodätischen Messungen zu mehreren in der Umgebung verteilten Zielpunkten zeitaufwändig und kostenintensiv sind.

Die EP 1 517 116 A1 beschreibt ein Verfahren und eine Vorrichtung zur Bestimmung der Aktualposition eines geodätischen Messinstruments in einem Totbereich, indem von einem Positionierungssystem stammende Signale abgeschattet sind. Dabei werden mindestens zwei Referenzstrukturen von mindestens zwei bekannten Positionen aus erfasst und Entfernungen gemessen, sowie damit verknüpfte Bildinformationen aufgenommen. Auch dieses spezialisierte Verfahren ist aufwändig.

Die DE 10308525 A1 betrifft ein Vermessungssystem wie beispielsweise ein Theodolit oder eine Gesamtstation mit Winkelmessfunktionalität und einer Abbildungsvorrichtung, z.B. einer Kamera.

Die US 2002/0126895 A1 offenbart ein Punktdetektionsgerät zur Detektion von Punktpositionen in einem Zielbild.

Arbeits- und zeitaufwändige Methoden sind zur Bestimmung der aktuellen Stationierung nach dem Stand der Technik selbst für in der gleichen Messumgebung wiederkehrende, mit einem Abbau und Wiederaufstellen oder Versetzen des aufgebauten Vermessungsgeräts verbundene Messungen notwendig. Wenn beispielsweise nicht sehr zeitaufwändig ein Vermarken und Zentrieren vorgenommen wird, um das Vermessungsgerät exakt über einer vormaligen Stationierung aufzustellen, liegt in derartigen Situationen ein Versatz zwischen der vormaligen, ersten Stationierung, also der Position und Orientierung beim vorherigen Standort, und der aktuellen, zweiten Stationierung, also der aktuellen Position und Orientierung des Vermessungsgeräts, vor. Solch wiederkehrende Messungen in der gleichen Messumgebung von ähnlichen Standorten aus und dabei in verschiedener Stationierung erfolgen beispielsweise auf Baustellen zur Vermessung von seit der letzten Vermessung neu erbauten Objektpunkten oder mehrere Messungen mit Versetzen des Vermessungsgeräts, um ausgedehnte Umgebungsobjekte vollständig erfassen zu können, z.B. das Vermessen aller vier Seiten eines Hauses oder das Erfassen von Objektstellen, beispielsweise eines Strassenzugs, die von einem Standort aus gesehen verdeckt sind, beispielsweise durch ein Gebäude oder einen Felsvorsprung.

Direktes Geo-Referenzieren als alternatives Verfahren zur Bestimmung der aktuellen Stationierung mittels an diesem angeschlossener GNSS-Empfänger liefert weniger präzise Ergebnisse und haben zudem den Nachteil, dass das Verfahren an den Empfang von GNSS-Signalen gebunden ist, der z.B. in Tunneln oder eng bebauten Umgebungen unterbunden sein kann.

Die Aufgabe der vorliegenden Erfindung besteht daher in der Bereitstellung eines alternativen und vereinfachten Verfahrens zum präzisen Bestimmen des Positions- und Orientierungsversatzes einer aktuellen, zweiten Stationierung zu einer vormaligen, ersten Stationierung eines geodätischen Vermessungsgeräts.

Eine weitere Aufgabe der vorliegenden Erfindung besteht darin, ein vollautomatisiertes, rasch durchführbares präzises Bestimmen eines solchen Positions- und Orientierungsversatzes zu ermöglichen.

Eine weitere Aufgabe der vorliegenden Erfindung besteht darin, ein Bestimmen eines solchen Positions- und Orientierungsversatzes ohne Verwendung eines weiteren geodätischen Geräts und ohne Verwendung von positionsgebenden Signalen zu ermöglichen.

Eine weitere Aufgabe der vorliegenden Erfindung besteht darin, Messumgebungspunkte der gleichen Messumgebung, welche von unterschiedlichen Stationierungen in der Messumgebung aus vermessen werden, in Bezug auf eine der Stationierungen zu referenzieren.

Eine weitere Aufgabe der vorliegenden Erfindung besteht darin, das präzise Bestimmen der aktuellen, zweiten Stationierung eines geodätischen Vermessungsgeräts in einem äusseren, insbesondere georeferenzierten, Bezugssystem anhand einer vormaligen, ersten Stationierung zu ermöglichen.

Eine weitere Aufgabe der vorliegenden Erfindung besteht in der Bereitstellung eines geodätischen Vermessungsgeräts für ein solches Verfahren.

Diese Aufgaben werden erfindungsgemäss durch die kennzeichnenden Merkmale der unabhängigen Ansprüche oder durch Merkmale der abhängigen Ansprüche gelöst bzw. diese Lösungen weitergebildet.

Die vorliegende Erfindung betrifft ein Verfahren zum präzisen Bestimmen des Positions- und Orientierungsversatzes einer zweiten Stationierung eines geodätischen Vermessungsgeräts zu einer ersten Stationierung, wobei sich die beiden Stationierungen in der gleichen Messumgebung befinden. Im Rahmen des Verfahrens wird ein zweites Umgebungsabbild mindestens eines zweiten zusammenhängenden Bereichs der Messumgebung von der zweiten Stationierung aus aufgenommen. Abbildelemente des zweiten Umgebungsabbildes werden mit korrespondierenden Abbildelementen eines ersten Umgebungsabbildes, welches von der ersten Stationierung aus aufgenommen ist und mindestens einen ersten zusammenhängenden Bereich der Messumgebung abbildet, gematcht, wobei der erste und der zweite zusammenhängende Bereich eine Vielzahl gemeinsamer Messumgebungspunkte aufweisen. Zu Messumgebungspunkten, welche übereinstimmenden Abbildelementen entsprechen, werden Richtungen im inneren Bezugssystem des geodätischen Vermessungsgeräts jeweils von der ersten und der zweiten Stationierung aus anhand der Lage des entsprechenden Abbildelements im jeweiligen Abbild bestimmt. Aus den bestimmten Richtungen ist ein unskalierter d.h. noch nicht den realen Massen der Messumgebung entsprechender Positions- und Orientierungsversatz ermittelbar. Das Bestimmen des Skalierungsfaktors d.h. des Abbildungsmassstabs erfolgt beispielsweise, indem die Entfernung von der zweiten Stationierung aus zu wenigstens einem richtungsbestimmten Messumgebungspunkt präzise berührungslos, vorzugsweise laseroptisch, gemessen wird oder indem ein Objekt der Messumgebung bekannter Grösse, z.B. eine Messlatte (scale bar) oder eine Messstrecke bekannter Länge, welches im, vorzugsweise zweiten, Umgebungsabbild abgebildet ist, herangezogen wird. Das präzise Bestimmen des Positions- und Orientierungsversatzes erfolgt anhand der bestimmten Richtungen in Bezug zur ersten und zur zweiten Stationierung zu Messumgebungspunkten, welche korrespondierenden Abbildelementen entsprechen und anhand des bestimmten Skalierungsfaktors.

Ebenso betrifft die vorliegende Erfindung ein geodätisches Vermessungsgerät zur Durchführung des erfindungsgemässen Verfahrens. Das geodätische Vermessungsgerät weist eine Steuer- und Auswerteeinheit auf, welche ausgebildet ist zur Ausführung des erfindungsgemässen Verfahrens. Das geodätische Vermessungsgerät weist zudem einen um eine Schwenkachse schwenkbaren Aufbau auf, der auf einer Basis angeordnet ist. Weiter weist das geodätische Vermessungsgerät eine Anzieleinheit mit einer Einheit zur Emission eines Laserstrahls und eine Laserentfernungsmessfunktionalität auf, anhand derer die Entfernung zu einem Punkt der Messumgebung laseroptisch messbar ist. Ausserdem weist das geodätische Vermessungsgerät eine Winkelmessfunktionalität zur präzisen Erfassung zumindest eines durch eine relative Schwenkposition des Aufbaus zur Basis definierten Schwenkwinkels auf, anhand derer die Richtung zu einem Messumgebungspunkt messbar ist. Unter einem Messumgebungspunkt ist ein kleiner, punktförmiger Ausschnitt der Oberfläche eines Objekts (ein Gebäude, ein Bodenbereich usw.) in der Umgebung des geodätischen Vermessungsgeräts zu verstehen. Weiter weist das geodätische Vermessungsgerät eine Einheit zum Aufnehmen von Umgebungsabbildern auf, insbesondere eine Digitalkamera oder ein Laserscanmodul. In bevorzugten Ausführungsformen handelt es sich bei dem geodätischen Vermessungsgerät um eine Totalstation oder einen Theodoliten.

Das Messen von Richtungen und Entfernungen erfolgt in Bezug zu einem inneren Bezugssystem des geodätischen Vermessungsgeräts. Unter einer Stationierung sind ein fixer Standort und eine fixe Ausrichtung des geodätischen Vermessungsgeräts zu verstehen, denen eine Position und Orientierung in Bezug auf ein äusseres Bezugssystem zugeschrieben werden kann. Mit anderen Worten sind in der jeweiligen Stationierung sowohl die Lage des Nullpunkts bzw. Ursprungs und die Richtungen der Koordinatenachsen des inneren Bezugssystems im äusseren Bezugssystem bestimmbar. Unterschiedliche erste und zweite Stationierung ergeben sich durch ein Versetzen oder Verschieben des geodätischen Vermessungsgeräts innerhalb der gleichen Messumgebung und damit ein Versetzen oder Verschieben des Ursprungs seines inneren Bezugssystems und/oder durch eine Veränderung seiner Ausrichtung. Dies verursacht einen Positionsversatz und/oder Orientierungsversatz zwischen den beiden Stationierungen und ist mathematisch durch eine Transformation aus Translation und/oder Rotation beschreibbar. Durch das erfindungsgemässe Verfahren werden dieser Positionsversatz und Orientierungsversatz bzw. die Parameter der Translation bestimmt, vorzugsweise in Bezug auf alle sechs Freiheitsgrade (drei Positions-/Translationsfreiheitsgrade und drei Orientierungs-/Rotationsfreiheitsgrade). Optional erfolgt anhand des bestimmten Positions- /Orientierungsversatzes bzw. anhand der Transformationsparameter ein Bestimmen der zweiten Position und der zweiten Orientierung, welche die zweite Stationierung definieren, relativ zu ersten Position und Orientierung, welche die erste Stationierung definieren. Ist die erste Stationierung in Bezug auf ein äusseres Bezugssystem bestimmt, erfolgt somit wenigstens implizit auch ein Bestimmen der zweiten Stationierung in Bezug auf das äussere Bezugssystem. Ist insbesondere die erste Stationierung durch Bezug auf ein geodätisches, absolutes Referenzbezugssystem, z.B. dem International oder European Terrestrial Reference System 1989 (ITRS89/ETRS89) mit Universal Transverse Mercator (UTM) Projection, dem World-Geodetic-System 84 (WGS 84) oder dem Gauss-Kürger-System, georeferenziert, ist somit wenigstens implizit auch die zweite Stationierung georeferenziert. Das Bestimmen des Positions- /Orientierungsversatzes bzw. der Transformationsparameter bzw. der zweiten Stationierung kann dabei generell nur dahingehend implizit erfolgen, dass diese Informationen benutzt werden, um damit eine der beiden anderen Informationen zu bestimmen (z.B. die zweite Stationierung aus dem Positions-/Orientierungsversatz). Falls die explizite Kenntnis keiner der genannten Informationen an sich für eine Vermessungsaufgabe mit dem geodätischen Vermessungsgerät erforderlich ist, erfolgt optional das Bestimmen dahingehend implizit, dass diese Informationen benutzt werden, um die Lage von Messumgebungspunkten, die von der zweiten Stationierung aus vermessen werden, in Bezug auf die erste Stationierung bzw. das absolute, äussere Bezugssystem zu bestimmen. In diesem Fall erfolgt mit anderen Worten aus Kenntnis des Positions- und Orientierungsversatzes ein Vermessen von der zweiten Stationierung aus hinsichtlich der Positionsbestimmung von Messumgebungspunkten so, als ob von der ersten Stationierung aus vermessen werden würde.

Zum Bestimmen des Positions- und Orientierungsversatzes zwischen der zweiten Stationierung und der ersten Stationierung erfolgt ein Aufnehmen eines zweiten Umgebungsabbildes von der zweiten Stationierung aus. Das Aufnehmen des Umgebungsabbildes erfolgt mit der Einheit zum Aufnehmen von Umgebungsabbildern, welche das geodätische Vermessungsgerät aufweist, z.B. eine Digitalkamera mit einem positionssensitiven Detektor, z.B. einem CMOS-Sensor oder CCD-Sensor, oder eine Einheit zum Erstellen von Umgebungsabbildern mit Tiefeninformation, bspw. eine Range-Imaging-Kamera (RIM), eine Stereokamera oder ein Laserscanmodul, wobei das Laserscanmodul optional zur Erfassung des reflektierten Laserlichtintensität ausgebildet ist. Ein geodätisches Vermessungsgerät, das ein Laserscanmodul aufweist, wird beispielsweise in der EP 12153163, eingereicht am 30.1.2012 von der gleichen Anmelderin, beschrieben. Entsprechend ist ein Umgebungsabbild z.B. eine Digitalfotografie, ein Range-Image oder ein 3D-Laserscan.

Das zweite und ebenso das erste Umgebungsabbild bilden jeweils einen zweiten bzw. ersten zusammenhängenden Bereich der Messumgebung ab. Idealerweise wird ein grosser zusammenhängender Umgebungsbereich erfasst, bspw. entsprechend einem Aufnahmewinkelbereich von wenigstens 70°, insbesondere zwischen 90° und 270°, im Speziellen von wenigstens 130°, in zumindest weitgehend, horizontaler Ausrichtung (bezogen auf das äussere Bezugssystem) mit einem definierten vertikalen Öffnungswinkel, dessen Betrag beispielsweise im Wertebereich von -90° bis +90°, insbesondere zwischen -50° und +50° liegt. Vorzugsweise erfolgt ein Aufnehmen des ganzen Umkreises des Standortes des geodätischen Vermessungsgeräts, also ein, ggf. mehrschrittiges, Aufnehmen eines Umgebungsabbildes über einen horizontalen Winkelbereich von 360° bei einem vertikalen Öffnungswinkel von z.B. 60°, wodurch ein Panoramaabbild bzw. Range-Panorama-Image oder 360°-3D-Scan erzeugt wird. Dies erfolgt vorzugsweise automatisch, wozu das geodätische Vermessungsgerät einen Motor zum Drehen der aufweist, mit dem die Einheit zum Aufnehmen von Umgebungsabbildern um eine horizontale Achse gedreht werden kann. Ein Umgebungsabbild kann aus einer Kombination mehrerer Einzelabbilder bestehen, die jeweils einen unterschiedlichen zusammenhängenden Umgebungsbereich darstellen. Beispielsweise können vier um 90° in horizontaler Richtung versetzte Aufnahmen mit einem Aufnahmebereich jeweils von 90° zu einem Panoramaabbild als zweitem Umgebungsabbild zusammengefasst werden.

Erfindungsgemäss ist jedoch auch ein zusammenhängender Umgebungsbereich ausreichend, wie er einer Einzelabbildaufnahme mit den technischen Möglichkeiten einer handelsüblichen Digitalkamera entspricht, i.d.R. also ein Bildwinkel von ca. 47°. Relativ kleine Umgebungsausschnitte entstehen beispielsweise bei Verwendung einer Digitalfotografie mit einem Bildwinkel von 12°, bei einem eindimensionalen Rundum-(360°)-Laserscan in nur einer, zumindest weitgehend, horizontalen Ebene (bezogen auf das äussere Bezugssystem), oder bei einer Aufnahme mit einem Bildwinkel von 1,5°, wie sie z.B. durch eine Teleskop-Kamera bzw. On-axis-Kamera eines geodätischen Vermessungsgeräts angefertigt werden kann. Je nach Umgebung, Abbildtyp und Abbilddetailgrad kann solch ein kleiner Umgebungsbereich hinsichtlich des präzisen Bestimmens des Positions- und Orientierungsversatzes genügen.

Wie weiter oben beschrieben erfolgt das Versetzen des Vermessungsgeräts innerhalb der gleichen Messumgebung. Dementsprechend sind durch die Einheit zum Aufnehmen eines Umgebungsabbilds in der zweiten Stationierung zumindest teilweise gleiche Teile der Umgebung wie in der ersten Stationierung erfassbar. Das Aufnehmen des zweiten Umgebungsabbilds erfolgt dergestalt, dass das zweite Umgebungsabbild wenigstens einen der Umgebungsteile abbildet, welcher auch im ersten Umgebungsabbild abgebildet ist, so dass der zweite und der erste zusammenhängenden Bereich der Messumgebung eine Vielzahl gemeinsamer Messumgebungspunkte aufweisen. Mit anderen Worten werden in beiden Umgebungsabbildern zumindest teilweise gleiche punktförmige Ausschnitte der Oberfläche von Objekten in der Messumgebung (eines Gebäude, eines Bodenbereich usw.) erfasst, wobei Gleichheit keine absolute Deckungsgleichheit der punktförmigen Ausschnitte bedeuten muss, sondern eine Übereinstimmung der erfassten Ausschnitte im Rahmen des Auflösungsvermögens z.B. der Digitalkamera oder des Laserscanmoduls.

Durch das Aufnehmen eines Panoramaabbilds bzw. Range-Panorama-Images oder 360°-3D-Scans/Panoramascans als zweites und/oder erstes Umgebungsabbild bei einem vertikalen Öffnungswinkel von bspw. 90° wird ein Grossteil der Messumgebung erfasst, weshalb auf diese Weise i.d.R. besonders einfach ein erstes und ein zweites Umgebungsabbild mit einer Vielzahl gemeinsamer Messumgebungspunkte erstellt werden. Ein gezieltes Spezifizieren des zusammenhängenden Umgebungsbereiches ist höchstens insoweit erforderlich, dass ein grobes horizontales Ausrichten der Einheit zum Aufnehmen eines Umgebungsabbildes (bzw. des geodätischen Vermessungsgeräts) und/oder ein Einstellen des geodätischen Vermessungsgeräts auf eine spezifische grobe Höhe über dem Boden erforderlich sind.

Ein weitergehend gezieltes Spezifizieren des zweiten und/oder ersten zusammenhängendes Bereichs und entsprechendes Ausrichten der Einheit zum Aufnehmen des Umgebungsabbild erfolgt optional vor Aufnehmen des Umgebungsabbildes, insbesondere zur Aufnahme von Umgebungsabbildern mit einem relativ kleinen Sichtfeld der Einheit zum Aufnehmen eines Umgebungsabbildes, oder nach dem Aufnehmen, indem ein spezifischer Bereich aus dem Umgebungsabbild ausgewählt wird. Ein solches gezieltes Spezifieren erfolgt erfindungsgemäss automatisch. Dabei wird insbesondere der zweite zusammenhängende Bereich angepasst an den bzw. aus Kenntnis des ersten zusammenhängenden Bereichs gezielt spezifiziert. Dabei wird optional eine grobe Positions- und Orientierungsinformation der aktuellen, zweiten Stationierung bestimmt, beispielsweise durch Sensoren am geodätischen Vermessungsgerät wie Neigungssensoren, GNSS-Sensoren, durch einen Mobilfunkempfänger des geodätischen Vermessungsgeräts oder durch ein abbildbasiertes, vergleichendes Verfahren unter Verwendung positions- und orientierungsreferenzierter Abbilder von Umgebungen, wie es beispielsweise in der Anmeldung EP 13175115.8, eingereicht am 4.7.2013 von der gleichen Anmelderin, beschrieben ist. Anhand der groben Position und Orientierung und im geodätischen Vermessungsgerät hinterlegter Information, vorzugsweise das mit der groben Position verknüpfte erste Umgebungsabbild, wird der erste zusammenhängende Bereich identifiziert. Anhand der mittels der groben Positions- und Orientierungsinformation grob bekannten Lage des ersten zusammenhängenden Bereichs oder von markanten Umgebungspunkten des ersten Bereichs relativ zur aktuellen, zweiten Stationierung erfolgt automatisch ein gezieltes Spezifizieren und Aufnehmen des zweiten zusammenhängenden Bereichs zur anschliessenden, präzisen Bestimmung des Positions- und Orientierungsversatzes mittels des ersten und des derart gezielt aufgenommenen zweiten Umgebungsabbildes.

Um ausreichende Übereinstimmung von Messumgebungspunkten bzw. eine Vielzahl von gemeinsamer Messumgebungspunkte zu erreichen, decken optional in den Umgebungsabbildern aufgenommene Messumgebungspunkte den jeweiligen aufgenommenen zusammenhängenden Bereich mit einer vorgegebenen Mindestdichte ab. Eine Mindestdichte, mit der die aufgenommenen Messumgebungspunkte den Umgebungsbereich abdecken, ist bei Verwendung einer Digitalkamera beispielsweise durch die Pixelanzahl des Bildsensors vorgegeben, die z.B. zwischen 0,5 Megapixel und 16 Megapixel, insbesondere zwischen 2 Megapixel und 8 Megapixel, beträgt, bei einer Bildsensorfläche von typischerweise 5,76mm auf 4,29mm. Bei Verwendung eines Laserscanmoduls entspricht die Mindestdichte der Rasterdichte und liegt bspw. bei einem Punktabstand zwischen 500mm und 0,5mm bei 10m Distanz zum Standort, insbesondere zwischen 100mm und 2mm bei 10m Distanz zum Standort, im Speziellen zwischen 50mm und 5mm bei 10m Distanz zum Standort.

Bei einer Fotografie als Umgebungsabbild handelt es sich um eine schwarz/weiss-Aufnahme, eine Farbfotografie mit einer Farbtiefe von beispielsweise 24 Bit oder eine Aufnahme über einen begrenzten Spektralbereich. Alternativ besteht ein Umgebungsabbild aus einer 3D-Punktwolke oder miteinander in Bezug gesetzten, insbesondere geometrisch angeordneten, Entfernungsmessungen, wobei optional ein Aufnehmen und Zuordnen von Texturen erfolgt. Alternativ wird aus zweidimensionalen Kamerabildern mit leicht versetzter Aufnahmeausrichtung ein 3D-Bild, z.B. mittels Semi-Global-Matching, und/oder eine zweidimensionale Anordnung von Entfernungsmessungen und damit eine Art dreidimensionales Abbild des erfassten Sichtfeldes erstellt. Optional werden für jeden Abbildpunkt Helligkeit und Entfernung aufgenommen, so dass für jede Abbildinformation, die beispielsweise aus der Lage eines Abbildpunktes besteht, eben diese Helligkeitswerte und Entfernungen verfügbar sind. Als weitere Option erfolgt die Anordnung einer Entfernungsmessung relativ zu anderen Entfernungsmessungen, so dass auf die Kenntnis der Lage eines jeden Abbildpunktes hinsichtlich des Aufnahmeortes verzichtet werden kann. Hierdurch kann beispielsweise auf eine vollständige Auswertung des erfassten Sichtbereichs verzichtet werden, so dass sich z.B. mit Subwindowing oder Subframing höhere Verarbeitungsgeschwindigkeiten realisieren lassen.

In einem weiteren Schritt des erfindungsgemässen Verfahrens werden Abbildelemente des zweiten Umgebungsabbildes mit korrespondierenden Abbildelementen des ersten Umgebungsabbildes gematcht. Mit anderen Worten erfolgt ein Zuordnen von einander entsprechenden Abbildelementen. Abbildelemente entsprechen einander insbesondere dann, wenn sie Abbildungen des gleichen Messumgebungspunktes sind. Bei Abbildelementen handelt es sich um die "Rohdaten" des jeweiligen Umgebungsabbilds, also um einzelne Pixel bzw. Punkte der 3D-Punktwolke bzw. des 3D-Abbildes (ggf. auch Subpixelelemente bzw. Zwischenpunkte) wobei zum Matchen z.B. deren Farbwerte oder relative Helligkeitswerte und deren Lage im Abbild herangezogen werden und das Matchen anhand aller Pixel oder Punkte eines Abbilds erfolgt oder nur anhand bestimmter Pixel oder Punkte, z.B. jedes 16. oder 128.

Alternativ oder zusätzlich handelt es sich bei den Abbildelementen um Abbildmerkmale (englisch: "features"), welche aus den Umgebungsabbildern mittels Abbildverarbeiten extrahiert werden. Bei der Merkmalsextraktion erfolgt in der Regel zuerst eine Suche nach ausgeprägten Regionen oder Punkten in der Abbildung (englisch: "interest points"), beispielsweise mittels Hough-Transformation oder kanten- und/oder regionenbasierter Segmentierung, z.B. Förstner-Operator, Harris-Laplace-Detektor und/oder Maximally Stable Extremal Regions (MSER) Detektor. Dann werden in der Regel die gefundenen Regionen oder Punkten mit Deskriptoren (englisch: "decriptors") ergänzt. Solche extrahierte Abbildmerkmale sind z.B. geometrische Elemente (z.B. dominante Linien, Bogensegmente oder Strecken) oder statistische Deskriptoren wie Histogram of Oriented Gradients, SIFT, SURF, ORB, BRISK und andere. Ist das Umgebungsabbild dreidimensional, sind die Merkmale oder Punkte ebenfalls in einem dreidimensionalen Raum verteilt und es werden entsprechende Verfahren verwendet, wie z.B. basierend auf Hough Transformation, geometrischen Formen, Deskriptoren, Spin-Images und NARF (Normal-Aligned-Radial-Features). Alternativ können die Merkmale oder Punkte auf eine, beispielsweise horizontale, Ebene projiziert werden. Verfahrensmässig genutzt werden Position und/oder Grösse der Abbildmerkmale im Umgebungsabbild, die relativen Lagen zueinander, ein durch solche Punkte, Linien, Flächen oder Körper gebildetes flächiges oder dreidimensionales Muster, usw. Beispielsweise wird ein zu einem Deskriptor des ersten oder zweiten Umgebungsabbildesäquivalenter Deskriptor des jeweils anderen Umgebungsabbildes gematcht, optional unter Berücksichtigung eines gesetzten Schwellenwerts.

Das Matchen erfolgt manuell durch Zuordnen korrespondierender Abbildelemente durch einen Benutzer, z.B. indem das erste und zweite Umgebungsabbild nebeneinander oder überlagernd auf einem Display des geodätischen Vermessungsgeräts angezeigt werden und/oder automatisch durch einen Matching-Algorithmus. Matching-Algorithmen sind in einer grossen Vielzahl bekannt, von denen hier rein beispielhaft aufgezählt werden Algorithmen des Sum-of-Squared-Differences (SSD), des Normalized-Cross-Correlation (NCC), des Least-Squares (LSQ), des Iterative-Closest-Point (ICP), des Geometric-Primitive-ICP, Iterative-Mean-Point, Dense-Matching (z.B. Semi-Global-Matching (SGM)), K-d Tree Algorithmus, RANSAC, insbesondere in Kombination mit Scale-Invariant-Feature-Transform (SIFT), oder Speeded-Up-Robust-Features (SURF). Insbesondere kann ein Matchen über eine Kombination verschiedener Ansätze erfolgen, z.B. mittels eine Algorithmus, der sowohl "Rohdaten" als auch extrahierte Merkmale verwendet wie beispielsweise ein Point-to-Plane-ICP-Algorithmus. Als weitere Option erfolgt das Matchen gestuft anhand unterschiedlicher Methoden, indem zuerst ein grobes Matchen erfolgt (z.B. Matchen korrespondierender Ausrichtungen beider Umgebungsabbilder (englisch: "image alignement") oder Matchen grossflächiger/grossräumiger Abbildsegmente) und dann ein Feinmatchen (Matchen kleinflächiger/kleinräumiger Abbildsegmente oder Matchen einzelner Pixel/Punkte).

Korrespondierenden Abbildelementen entsprechen Messumgebungspunkte, welche sowohl im ersten als auch im zweiten zusammenhängenden Bereich vorhanden sind und sowohl aus der ersten als auch aus der zweiten Stationierung im jeweiligen Umgebungsabbild erfasst sind. Somit sind sowohl in Bezug zur ersten Position und Orientierung als auch in Bezug zur zweiten Position und Orientierung (also in Bezug zum inneren Bezugssystem des geodätischen Vermessungsgeräts in der ersten und in der zweiten Stationierung) Richtungen zu solchen Messumgebungspunkten bestimmbar. Erfindungsgemäss erfolgt ein Bestimmen der Richtungen in Bezug zu beiden Positionen und Orientierungen mittels geometrischer Prinzipien anhand der Lage des jeweiligen korrespondierenden Abbildelements im jeweiligen Umgebungsabbild, welche zu einem erstes Bündel an Richtungen relativ zur ersten Stationierung und einem zweites Bündel an Richtungen relativ zur zweiten Stationierung zusammenfassbar sind. Bei einem Laserscan bzw. einer Punktwolke als Umgebungsabbild erfolgt ein Bestimmen der Richtungen zu "korrespondierenden" Messumgebungspunkten (also solchen Messumgebungspunkte, die korrespondierenden Abbildelementen entsprechen), indem ein Auswählen aus den, gemäss der Erstellungsprozedur eines Laserscans bzw. einer Punktwolke, bereits vorliegenden Richtungen zu allen abgebildeten Messumgebungspunkten zu solchen Messumgebungspunkten erfolgt, welche zu korrespondierenden Abbildelementen gehören. Bei einer Fotografie als Umgebungsabbild werden zum Bestimmen der Richtungen die optischen Parameter der Kamera berücksichtigt, insbesondere die Lage des Projektionszentrums relativ zur Abbildebene bzw. dessen Lage im inneren Bezugssystem des geodätischen Vermessungsgeräts. So ist durch die Lage eines jeweiligen Abbildelements im Umgebungsabbild, welche durch die Lage des oder der entsprechenden Pixel auf dem Detektor der Digitalkamera bekannt ist, und die Lage des Projektionszentrums eine jeweilige Richtung festgelegt.

Erfolgt das Bestimmen des Skalierungsfaktors basierend auf einer berührungslosen Entfernungsmessung, wird zu wenigstens einem dieser "korrespondierenden" Messumgebungspunkte, zu welchen die Richtungen jeweils im inneren Bezugssystem in der ersten und in der zweiten Stationierung bestimmt werden, die Entfernung z.B. laseroptisch oder mittels anderer elektromagnetischer Wellen präzise von der zweiten Stationierung aus gemessen. Es erfolgt dann also das präzise Bestimmen der Entfernung dieses Messumgebungspunkts zum Nullpunkt des inneren Bezugssystems in der zweiten Stationierung. Das Messen der Entfernung erfolgt mit der Entfernungsmessfunktionalität der Anzieleinheit des geodätischen Vermessungsgeräts, wobei dies bei Vorliegen eines Laserscanmoduls unnötig ist, da bereits durch den Laserscan eine Entfernung laseroptisch bestimmt ist. Optional erfolgt dennoch zur Steigerung der Genauigkeit bzw. Zuverlässigkeit eine Entfernungsmessung mit der Anzieleinheit. Als weitere Option erfolgt das präzise Messen der Entfernung automatisch, wobei das geodätische Vermessungsgerät bzw. die Anzieleinheit auf den Messumgebungspunkt, der korrespondierenden Abbildelementen entspricht, automatisch ausgerichtet wird. Hierbei wird die ermittelte Richtung relativ zur zweiten Stationierung berücksichtigt.

Anhand der Richtungen zu Messumgebungspunkten, welche korrespondierenden Abbildelementen entsprechen, relativ zur ersten Stationierung und relativ zur zweiten Stationierung, und anhand des Skalierungsfaktors, der wie oben beschrieben beispielsweise aus einer laseroptischen Entfernungsmessung zu wenigstens einem dieser Messumgebungspunkte von einer, vorzugsweise der aktuellen zweiten, Stationierung aus resultiert, wird der Positionsversatz und Orientierungsversatz zwischen den beiden Stationierungen mittels geometrischer Prinzipien bzw. Algorithmen präzise bestimmt. Hierfür geeignete Methoden bzw. Algorithmen sind in grosser Vielzahl bekannt. Für fotographische Umgebungsabbilder eignen sich beispielsweise ein 7- bzw. 8-Punktalgorithmus unter Einbeziehung des Skalierungsfaktors, Bündelblockausgleich anhand von Verknüpfungspunkten (insbesondere der korrespondierenden Punkte) und ground control points. Für dreidimensionale Umgebungsabbilder eignen sich z.B. das Lösen eines Prokrustes-Problems durch Singulärwertzerlegung oder ICP-Algorithmus, vorzugsweise bei grober Vororientierung der Punktwolken.

Erfindungsgemäß erfolgt ein präzises Bestimmen der Parameter der Transformation zwischen der ersten und der zweiten Stationierung. Das Bestimmen des Positions- und Orientierungsversatzes bzw. der Translationsparamter erfolgt derart präzise, dass die zweite Position und die zweite Orientierung mit geodätischer Genauigkeit bestimmbar sind. Unter geodätischer Genauigkeit ist zu verstehen, dass die Positions- und Orientierungsinformationen hinsichtlich der zweiten Stationierung durch das erfindungsgemässe Verfahren derart präzise vorliegen, dass ein anschliessendes Vermessen mittels der Laserentfernungsmessfunktionalität und der Winkelmessfunktionalität des geodätischen Vermessungsgeräts von Messumgebungspunkten mit geodätischer Genauigkeit erfolgen kann, insbesondere mit wenigstens einer solchen Genauigkeit, wie sie herkömmliche Verfahren zum Bestimmen der aktuellen Stationierung eines geodätischen Vermessungsgeräts ermöglichen. Ein explizites Bestimmen der zweiten Position und Orientierung erfolgt ebenfalls optional. Ein anschliessendes geodätisches Vermessen mit dem geodätischen Vermessungsgerät von Messumgebungspunkten von der zweiten Stationierung aus erfolgt in einer Fortbildung des Verfahrens dergestalt, dass die Positionsdaten eines vermessenen Messumgebungspunkts anhand des vorliegenden Positions- und Orientierungsversatzes bzw. der Translationsparameter relativ zur ersten Position und Orientierung bestimmt werden. Ist die erste Stationierung georeferenziert, werden als weitere alternative oder zusätzliche Option die vermessenen Positionsdaten in das äussere, absolute Bezugssystem transformiert.

Zur Steigerung der Präzision und/oder Robustheit werden in einer Fortbildung des erfindungsgemässen Verfahrens zusätzlich zum ersten und zweiten Umgebungsabbild wenigstens ein weiteres Umgebungsabbild wenigstens eines weiteren, gezielt spezifizierten zusammenhängenden Bereichs der Messumgebung aufgenommen, vorzugsweise mit einer höheren Auflösung als diejenige des ersten und/oder zweiten Umgebungsabbildes. Zum gezielten Spezifizieren werden Abbildmerkmale herangezogen, welche erfindungsgemäss extrahiert sind aus einem ersten und/oder zweiten, in der Regel relativ niedrig auflösenden, Umgebungsabbild, das erstellt ist mit einem grossen Aufnahmewinkel, d.h. einem Abbild, welches einen grossräumigen zusammenhängenden Bereich abbildet wie z.B. ein Panoramaabbild oder 360°-3D-Scan. Erfindungsgemäss werden dabei automatisch ausgehend von dem oder den extrahierten Merkmalen gezielt ein oder mehrere kleinräumige Bereiche der Messumgebung spezifiziert, z.B. indem als Abbildmerkmal eine Gebäudeecke oder eine andere markanter Messumgebungspunkt identifiziert und ein kleinräumiger Ausschnitt der Messumgebung um diesen markanten Punkte als weiterer, kleinräumiger Bereich festgelegt wird. Ein Verfahren zum automatischen Absuchen der Messumgebung nach markanten Messumgebungsstellen wird beispielsweise in der Patentanmeldung EP 2591314 der gleichen Anmelderin, eingereicht am 7.7.2011, beschrieben. Der weitere, kleinräumige Bereich wird dann in einem weiteren Aufnahmeschritt in einem weiteren, vorzugsweise höher- bzw. hochauflösenden, Abbild aufgenommen. Weist beispielsweise das geodätische Vermessungsgerät eine overview-Kamera und eine Teleskop- oder On-axis-Kamera auf, wird zuerst mit der overview-Kamera ein Panoramaabbild als erstes bzw. zweites Umgebungsabbild aufgenommen, hieraus wenigstens ein Abbildmerkmal extrahiert, anhand dessen wenigstens ein kleinräumiger Bereich spezifiziert wird, welcher gezielt mit der Teleskop- oder On-axis-Kamera hochauflösend in einem weiteren Umgebungsabbild abgebildet wird. Weitere Beispiele sind ein Aufnehmen eines ersten bzw. zweiten Umgebungsbereiches mit einem Weitwinkelbild bzw.

Weitwinkelscan und darauf aufbauend das Aufnehmen eines Bilds bzw. Scans (oder umgekehrt) mit einem kleinen Aufnahme- bzw. Öffnungswinkel. Die weiteren erfindungsgemässen Verfahrensschritte zum Bestimmen des Positionsversatzes und Orientierungsversatzes (Matchen von Abbildelementen, Bestimmen der Richtungen, Bestimmen eines Skalierungsfaktors und präzises Bestimmen des Positions- und Orientierungsversatzes) erfolgen dann unter Verwendung des weiteren, vorzugsweise hochauflösenden, Umgebungsabbilds anstelle des ersten bzw. zweiten Umgebungsabbilds analog zur oben beschriebenen Vorgehensweise.

In einer weiteren Fortbildung des erfindungsgemässen Verfahrens werden mittels eines Evaluierens Güteindikatoren für Berechnungs- und/oder Messergebnisse erstellt. Ein solcher Güteindikator kennzeichnet beispielsweise die Unsicherheit, mit der ein Bestimmen einer groben Position oder Orientierung durch einen Sensor, ein Matchen oder ein Bestimmen von Transformationsparametern oder Positions- bzw. Orientierungsversatz behaftet sind. Ein Evaluieren von Berechnungs- und/oder Messergebnissen erfolgt beispielsweise durch Gewichten von Paaren korrespondierender Pixel bzw. 3D-Punkte, anhand eines Extended Kalman Filter (EKF) oder Gewichtung mittels der Maximum-Likelihood-Methode oder Weighted-Least-Square-Methode, woraus die Gewichtungsmatrix z.B. einer Variance Covariance Matrix (VCM) ableitbar ist. Durch das Evaluieren bzw. Erstellen eines Güteindikators kann die Zuverlässigkeit und/oder Genauigkeit des Verfahrens erhöht und ggf. Korrekturmassnahmen durch den Benutzer oder automatisiert eingeleitet werden.

Ein Vorteil des erfindungsgemässen Verfahrens liegt in seiner einfachen Durchführbarkeit. An Vorarbeit ist nur das Aufstellen und ggf. Horizontieren des geödatischen Vermessungsgeräts zu leisten. Arbeitsaufwändige Schritte wie Vermarken und Loten bzw. Zentrieren entfallen. Ausser dem erfindungsgemässen Vermessungsgerät sind keine weiteren Geräte erforderlich. Das erfindungsgemässe Verfahren erfordert z.B. im Gegensatz zu einem auf geodätischen Vermessungen basierendem Verfahren keine fachspezifischen Kenntnisse. Ein Benutzer kann zudem durch automatische Routinen bei einzelnen Schritten unterstützt werden.

Ausserdem bietet das erfindungsgemässe Verfahren den Vorteil, dass mit entsprechender Hard- und Software alle Schritte automatisiert und automatisch ablaufen können. Dazu ist ein erfindungsgemässes geödatisches Vermessungsgerät beispielsweise mit einer Kamera oder einem Laserscanmodul mit einem automatisiert gesteuerten Motor ausgestattet, um damit und mittels Abbildaufnahme- und Abbildverarbeitungsalgorithmen automatisch ein Umgebungsabbild zu erstellen. Das Matchen von Abbildelementen und ggf. deren vorheriges Extrahieren ist mittels entsprechender Abbildverarbeitungs- bzw. Merkmalsextrahierungsalgorithmen aus dem Stand der Technik wie weiter oben beschrieben ohne Benutzereingriffe durchführbar, ebenso mittels geometrischer Algorithmen das Bestimmen der Richtungen zu "korrespondierenden" Messumgebungspunkten. Mittels des automatisch gesteuerten Motors ist die Anzieleinheit auf einen "korrespondierenden" Messumgebungspunkt automatisch ausrichtbar, so dass das präzise laseroptische Messen wie auch, mittels geometrischer Algorithmen, das Bestimmen des Positions- und Orientierungsversatzes automatisch und automatisiert erfolgen können. Insbesondere bietet das erfindungsgemässe Verfahren den Vorteil, dass geodätische Vermessungsgeräte des Stands der Technik keiner zusätzlichen Hardware bedürfen, da sowohl eine Kamera bzw. ein Laserscanmodul als auch ein Steuermotor bereits vorhanden sind. Somit entstehen in dieser Hinsicht keine zusätzlichen Herstellungskosten.

Das erfindungsgemässe Verfahren kann also mittels eines geodätischen Vermessungsgeräts mit entsprechenden Steuer- und Auswertealgorithmen und ggf. mit Motorisierung teilweise und besonders vorteilhaft im Gesamten vollautomatisch ablaufen, was eine einfache und rasche Durchführung ermöglicht.

Abgesehen vom unmittelbaren Aufnehmen des zweiten Umgebungsabbildes, d.h. beispielsweise dem Fotografieren oder Scannen, bietet das erfindungsgemässe Verfahren weiterhin den Vorteil, dass Verfahrensschritte nicht an ein spezielles Gerät gebunden sind, sondern durch das geodätische Vermessungsgerät als auch durch Datenübertragung an externe Geräte, z.B. ein Cloud-Server oder ein Smartphone, extern erfolgen können. Beim Nutzen externer Geräte kann der bestimmte Positions- und Orientierungsversatz bzw. darüber bestimmte Daten an das geodätische Vermessungsgerät nach Abschluss der entsprechenden Berechnungen transferiert werden.

Das erfindungsgemässe Verfahren bietet insbesondere Vorteile in einer über einen längeren Zeitraum zu vermessenden Messumgebung. Dies ist z.B. der Fall auf einer Baustelle oder bei sich natürlicherweise verändernden Umgebungen. Vorteile bietet das erfindungsgemässe Verfahren auch in einer Messumgebung, in der ein Objekt von mehreren Standorten aus zu vermessen ist, z.B. die gesamte Oberfläche eines Gegenstands oder Oberflächen eines Teils eines Gegenstands, welche in einer Ansicht, beispielsweise durch andere Teile des Gegenstands, verdeckt sind. Es genügt dann, einmal einen Vermessungsgerätstandort bzw. eine erste Stationierung festzulegen, deren absolute Position, falls noch nicht vorliegend, einmalig mit einem anderweitigen Verfahren zu bestimmen und ein jeweiliges Abbild der Standortumgebung aufzunehmen und ggf. zu hinterlegen. Vermessungen von einer zweiten oder weiteren Stationierung in der Messumgebung aus sind mit dem erfindungsgemässen Verfahren einfach und unter geringem Zeitaufwand auf die erste Stationierung referenzierbar, so dass die Messdaten aller vermessenen Messumgebungspunkte, unabhängig vom tatsächlichen Vermessungsstandort, auf eine einzige, gemeinsame Stationierung, also Position und Ausrichtung, bezogen sind. In besonders vorteilhafter Weise werden in einer Fortbildung des Verfahrens erfindungsgemäss durch Georeferenzierung nur einer einzigen der Stationierungen die Positionsdaten aller von allen Stationierungen aus vermessenen Messumgebungspunkte in Bezug auf das absolute Bezugssystem bestimmt.

Die Erfindung betrifft ebenfalls ein Computerprogrammprodukt, das auf einem maschinenlesbaren Träger gespeichert ist, oder Computer-Datensignal, verkörpert durch eine elektromagnetische Welle, mit Programmcode, der geeignet ist, aus einem aufgenommenen Abbild der Umgebung des geodätischen Vermessungsgeräts nach dem erfindungsgemässen Verfahren den Positions- und Orientierungsversatz des geodätischen Vermessungsgeräts zu bestimmen.

Das erfindungsgemässe Verfahren sowie das erfindungsgemässe geodätische Vermessungsgerät werden nachfolgend anhand von in der Zeichnung schematisch dargestellten Ausführungsbeispielen rein beispielhaft näher beschrieben.

Im Einzelnen zeigen

Fig.1    den Positions- und Orientierungsversatz eines erfindungsgemässen Vermessungsgeräts in einer ersten und einer zweiten Stationierung;

Fig.2    ein schematisches Beispiel eines erfindungsgemässen Ablaufs des Verfahrens;

Fig.3a-d   Beispiele für erfindungsgemässes Aufnehmen von Umgebungsabbilder in einer ersten und einer zweiten Stationierung;

Fig.4a-c   Beispiele für erfindungsgemässe Matchen von übereinstimmenden Abbildelementen eines ersten und eines zweiten Umgebungsabbildes;

Fig.5    ein Beispiel für erfindungsgemässe Bestimmen des Positions- und Orientierungsversatzes anhand übereinstimmender Abbildelemente; und

Fig. 6    ein Beispiel für das erfindungsgemässe Transformieren der Lagedaten eines Messumgebungspunktes von der zweiten Stationierung zur ersten.

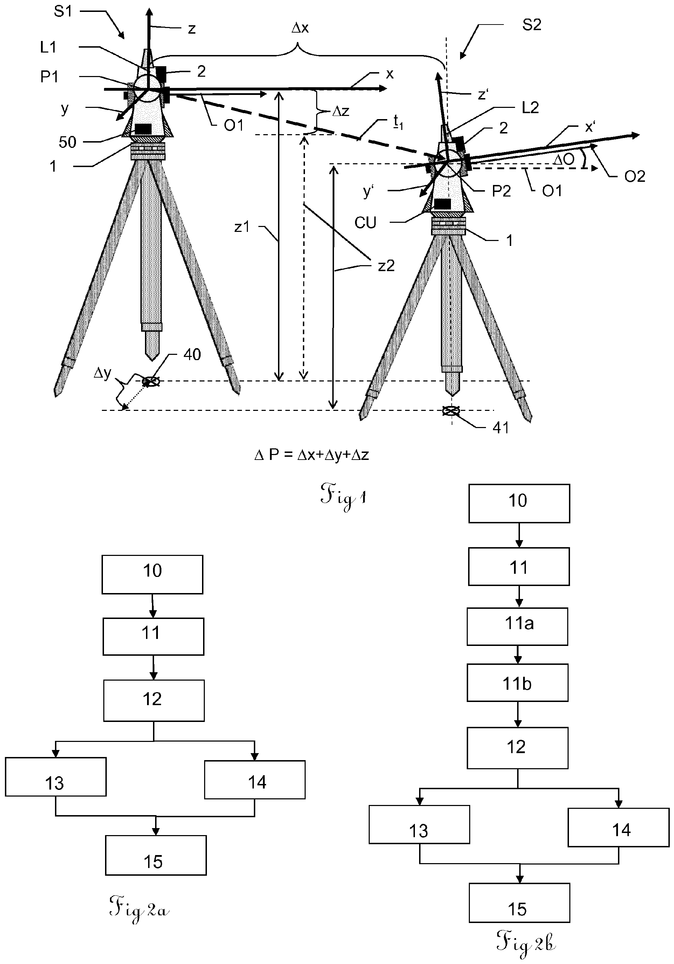

Fig.1 zeigt eine Totalstation als Ausführungsbeispiel eines geodätischen Vermessungsgeräts 1 mit einer Steuer- und Auswerteeinheit 50 und mit Laserentfernungsmessfunktionalität und Winkelmessfunktionalität in zwei verschiedenen Stationierungen S1 und S2.

Die erste Stationierung S1 ist durch eine erste Position P1 und eine erste Orientierung O1 definiert, die zweite Stationierung S2 durch eine zweite Position P2 und eine zweite Orientierung O2. Die erste bzw. zweite Position P1 bzw. P2 ist die Lage in einem äusseren Bezugssystem des Nullpunkts des inneren Bezugssystems der Totalstation, die erste bzw. zweite Orientierung O1 bzw. O2 ist die Orientierung des inneren Bezugssystems relativ zum äusseren Bezugssystem. Das innere Bezugssystem des Vermessungsgeräts bildet somit in der ersten Positionierung P1 mit der ersten Orientierung O1 ein erstes lokales Bezugssystem L1 mit den Achsen x,y,z und in der zweiten Positionierung P2 mit der zweiten Orientierung O2 ein zweites lokales Bezugssystem L2 mit den Achsen x',y',z'. Entfernungs- und Winkelmessungen durch die Totalstation sind bezogen auf deren inneres Bezugssystem, also jeweils auf das lokale Bezugssystem L1 bzw. L2.

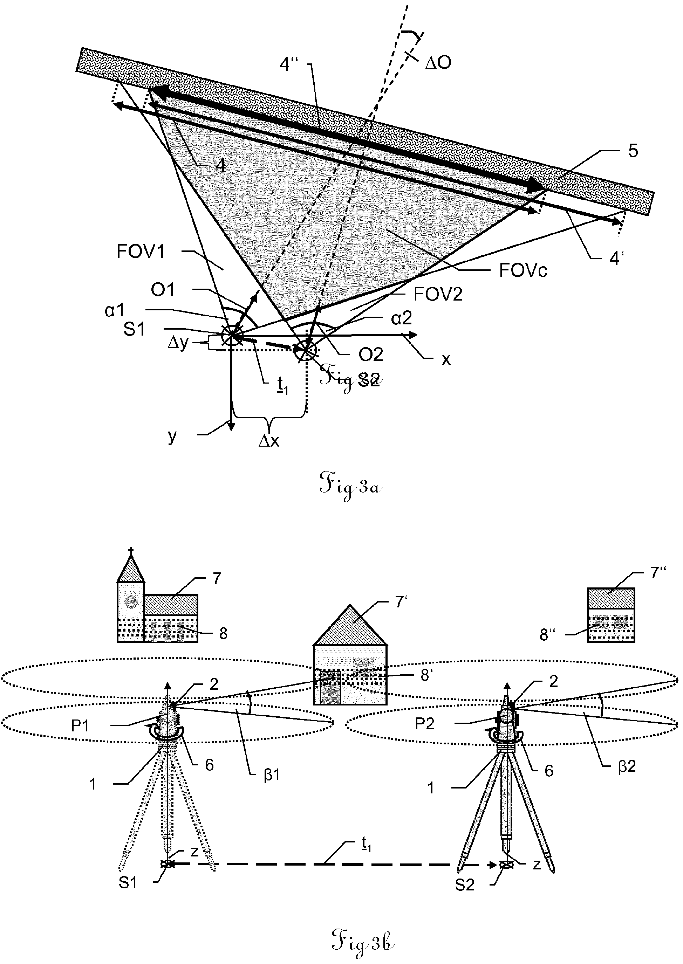

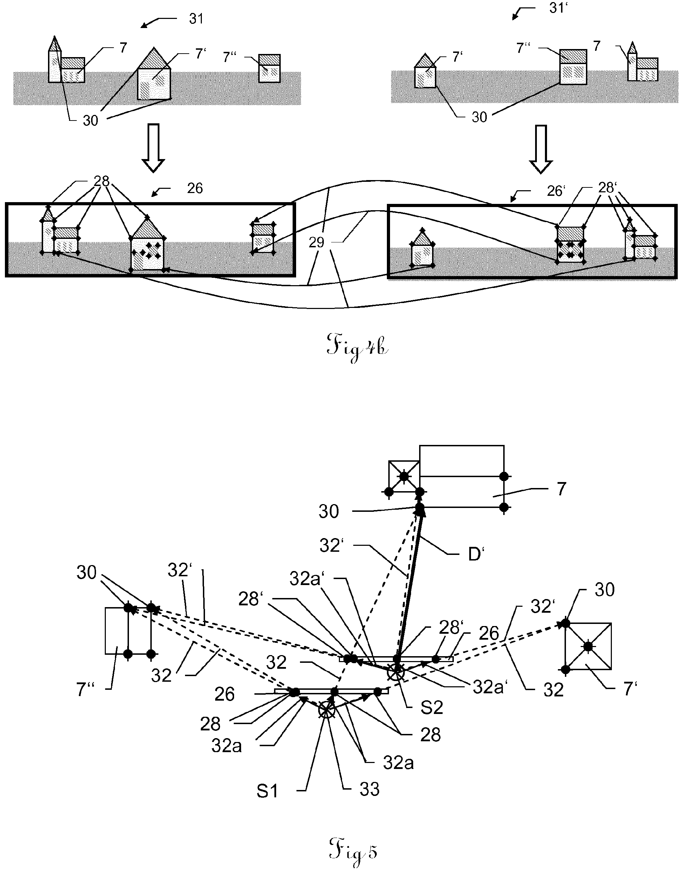

Die erste bzw. zweite Orientierung O1 bzw. O2 sind zeichnerisch dargestellt durch einen Pfeil O1 bzw. O2, welcher der Rotationsachse eines Sichtkegels der Totalstation entspricht, wobei die Spitze des Sichtkegels im Nullpunkt liegt und mit der Ausrichtung der x- bzw. x'-Achse zusammenfällt. In Fig. 1 ist das Vermessungsgerät 1 - ohne Beschränkung der Allgemeinheit - in der Stationierung S1 so ausgerichtet, dass die xy-Ebene parallel zur Bodenebene ist, in der zweiten Stationierung S2 so, dass das innere Bezugssystem im Vergleich zur ersten Stationierung S1 um die y-Achse gedreht ist. Die Bodenpunkte 40 und 41 stellen die, bezogen auf das äussere Bezugssystem, senkrechte Projektion des Nullpunkts auf den Boden dar und werden in den Figuren 3a-d und Fig. 5 der Einfachheit halber zur zeichnerischen Kennzeichnung der ersten bzw. zweiten Stationierung S1 bzw. S2 verwendet.

Die Verschiedenheit der ersten und der zweiten Stationierung S1 und S2 drückt sich in einem Positionsversatz $\Delta P$ aus, der sich aus dem jeweilen Unterschied $\Delta x$, $\Delta y$, $\Delta z$ entlang der Koordinatenachsen x,y,z zusammensetzt und durch den Translationsvektor $\underline{t}_1$ ausgedrückt werden kann, und in einem Orientierungsversatz $\Delta O$, der sich aus dem jeweilen Unterschied der drei Richtungswinkel zusammensetzt und durch eine Rotationsmatrix $\underline{\underline{R}}_{L2}^{L1}$ ausgedrückt werden kann. Zur einfacheren Darstellung unterscheiden sich im Beispiel die erste und die zweite Orientierung O1 bzw. O2 nur hinsichtlich eines einzigen Richtungswinkels (Rotation um die y-Achse). Dies stellt jedoch keine Beschränkung der Allgemeinheit dar, erfindungsgemäss ist der Orientierungsversatz $\Delta O$ bezogen auf alle drei Rotationsfreiheitsgrade bestimmbar. Der Translationsvektor $\underline{t}_1$ und die Rotationsmatrix $\underline{\underline{R}}_{L2}^{L1}$ ergeben zusammen die Transformationsparameter der Transformation zwischen dem ersten lokalen Bezugssystem L1 und dem zweiten lokalen Bezugssystem L2 bzw. zwischen der ersten Stationierung S1 und der zweiten Stationierung S2.

Ein Transformieren bzw. Versetzen des Vermessungsgeräts von der ersten Stationierung S1 zur zweiten Stationierung S2 (oder umgekehrt) findet in der Praxis beispielsweise aus folgenden Gründen statt: das Vermessungsgerät 1 wird zur Vermessung eines Gebäudes an einem ersten Standort aufgestellt, was die erste Stationierung S1 darstellt. Da vom ersten Standort aus nicht alle Gebäudeseiten vermessen werden können, wird zur weiteren Vermessung des Gebäudes das Vermessungsgerät 1 an einem zweiten Standort, also einer zweiten Stationierung S2, in der Nähe aufgestellt, von dem aus weitere Gebäudeseiten vermessbar sind, wobei erfindungsgemäss die Sichtfelder des Vermessungsgeräts 1 in der ersten und der zweiten Stationierung S1 bzw. S2 Überschneidungen aufweisen. Ein anderes praktisches Anwendungsbeispiel, welches zu einer Stationierungsverschiebung führt, ist das wiederholte Vermessen an unterschiedlichen Tagen jeweils mit Auf- und Abbau des Vermessungsgeräts 1, welches jeweils von einem ähnlichen Standort bei ähnlicher Ausrichtung erfolgen soll.

Für gewöhnlich bildet also die zweite Stationierung S2 den aktuellen Standort des Vermessungsgeräts 1. Üblicherweise sind dabei die erste Position P1 und erste Orientierung O1 der früheren ersten Stationierung S1 durch Positions- und Orientierungsbestimmung mittels eines Verfahrens nach dem Stand der Technik präzise bekannt, z.B. mittels freier Stationierung bzw. indirekter Geo-Referenzierung der ersten Stationierung S1. Mit anderen Worten ist das lokale Bezugssystem L1 in der Regel georeferenziert.

Mit dem erfindungsgemässen Verfahren werden nun präzise Positions- und Orientierungsinformationen (Positions- und Orientierungsversatz $\Delta P$ und $\Delta O$ bzw. zweite Position und Orientierung P2 und O2 bzw.

Translationsvektor $\underline{t}_1$ und Rotationsmatrix $\underline{\underline{R}}_{L2}^{L1}$ ) der zweiten Stationierung S2 bestimmt. Optional erfolgt anhand der präzisen Positions- und Orientierungsinformationen ein Transformieren der räumlichen Lagen von Messumgebungspunkten, welche in einer Stationierung S1 bzw. S2 bestimmt sind, auf die andere Stationierung S2 bzw. S1.

Fig. 2a zeigt schematisch ein Beispiel für einen Ablauf des erfindungsgemässen Verfahrens zur präzisen Bestimmung des Positions- und Orientierungsversatzes $\Delta P$ und $\Delta O$ (bzw. zur präzisen Bestimmung der zweiten Position und Orientierung P2 und O2 bzw. des

Translationsvektors $\underline{t}_1$ und der Rotationsmatrix $\underline{\underline{R}}_{L2}^{L1}$ ). In einem Schritt 10 wird das erste Umgebungsabbild an der ersten Stationierung S1 aufgenommen. In einem Schritt 11 wird das zweite Umgebungsabbild an der zweiten Stationierung S2 aufgenommen. Das Aufnehmen erfolgt jeweils durch eine Einheit 2 zum Aufnehmen eines Umgebungsabbildes, z.B. eine Digitalkamera mit positionssensitivem Detektor, eine RIM-Kamera oder ein Laserscanmodul, welche das Vermessungsgerät 1 aufweist und dessen Lage und Ausrichtung relativ zum internen Bezugssystem des Vermessungsgeräts 1 bekannt sind. Das erste Umgebungsabbild bildet wenigstens einen ersten Bereich der Umgebung des Vermessungsgeräts 1 ab, das zweite Umgebungsabbild wenigstens einen zweiten Bereich der Messumgebung. Das Aufnehmen erfolgt jeweils so, dass beide Bereiche dabei eine Vielzahl gemeinsamer Messumgebungspunkte aufweisen, so dass das erste und das zweite Umgebungsabbild sich wenigstens teilweise überschneiden. Hierzu wird vorzugsweise von der aktuellen Stationierung S2 das zweite Umgebungsabbild in analoger Weise zum ersten Umgebungsabbild aufgenommen, beispielsweise indem die Einheit 2 grob auf gleicher Höhe bezogen auf das äussere Bezugssystem positioniert und/oder gleiche Bildwinkelgrösse verwendet wird wie in der ersten Stationierung S1. Bei einem Vermessungsgerät 1 mit einer Digitalkamera als Einheit 2 ist das Umgebungsbild eine Fotografie, bei einer RIM-Kamera oder Laserscanmodul ist es eine 3D-Punktwolke. Im Schritt 12 werden korrespondierende Abbildelemente in den beiden Umgebungsabbildern gematcht. Das Matchen erfolgt anhand der Rohdaten der Umgebungsabbilder oder alternativ anhand von aus den Rohdaten extrahierten Abbildmerkmalen, wozu zuvor ein (nicht dargestellter) Verfahrenschritt erfolgt, in dem Abbildmerkmale extrahiert werden. Im Schritt 13 werden zu Messumgebungspunkten, welche durch korrespondierende Abbildelemente im ersten und im zweiten Umgebungsabbild abgebildet werden, die Richtungen im inneren Bezugssystem des Vermessungsgeräts 1 bestimmt. Dies erfolgt jeweils für die erste Position P1 mit der ersten Orientierung O1 und für die zweite Position P2 mit der zweiten Orientierung O2. Damit sind also die Richtungen solcher Messumgebungspunkte in Bezug zur ersten Stationierung S1 bzw. zum ersten lokalen Bezugssystem L1 und in Bezug zur zweiten Stationierung S2 bzw. zum zweiten lokalen Bezugssystem L2 bekannt. Ausserdem wird in einem Schritt 14 ein Skalierungsfaktor d.h. der Abbildungsmassstab bestimmt. Hierzu wird z.B. die Entfernung zu wenigstens einem dieser Messumgebungspunkte, dessen Richtungen in Bezug zur ersten bzw. zweiten Stationierung S1 bzw. S2 bestimmt bzw. bestimmbar sind, in Bezug auf die zweite Stationierung S2 bzw. zweite Positionierung P2 laseroptisch gemessen. Weist das Vermessungsgerät 1 ein Laserscanmodul auf, ist Schritt 14 in Schritt 10 bzw. Schritt 11 inkludiert, da mit Erstellen der 3D-Punktwolke per Laserscan bereits die Entfernungen der Messumgebungspunkte laseroptisch bestimmt sind. Alternativ oder bei Ausführung der Einheit 2 als Digitalkamera oder RIM-Kamera wird im Schritt 14 die Entfernung mittels der Laserentfernungsfunktionalität des Vermessungsgeräts 1 bestimmt. Als Alternative zu einer berührungslosen Entfernungsmessung wird ein Messumgebungsobjekt bekannter Grösse verwendet. Der Skalierungsfaktor wird dann aus dem Verhältnis der realen Grösse und der Grösse im Abbild bestimmt. In Schritt 15 werden schliesslich aus den in Schritt 13 bzw. Schritt 14 bestimmten Richtungen und dem Skalierungsfaktor die Transformationsparameter (Translationsvektor $\underline{t}_1$ und

Rotationsmatrix $\underline{\underline{R}}_{L2}^{L1}$ ) zwischen dem ersten lokalen Bezugssystem L1 und dem zweiten lokalen Bezugssystem L2 bzw. der Positions- und der Orientierungsversatz ΔP bzw. ΔO zwischen der ersten und der zweiten Stationierung S1 und S2 bzw. die zweite Position und Orientierung P2 und O2 der zweiten Stationierung S2 bestimmt.

Fig. 2b zeigt schematisch ein alternatives Beispiel für einen Ablauf des erfindungsgemässen Verfahrens zur präzisen Bestimmung des Positions- und Orientierungsversatzes ΔP und ΔO. Die Schritte 10 und 15 entsprechen jenen des Beispiels nach Fig. 2a, im Unterschied zu vorgenannten Beispiel sind die Schritte 11a und 11b eingefügt. Im Schritt 11a wird aus dem ersten und/oder zweiten Umgebungsabbild wenigstens ein Abbildungsmerkmal mittels eines abbildverarbeitenden Algorithmus extrahiert. Vorzugsweise handelt es bei dem ersten und/oder zweiten Umgebungsabbild um ein Abbild, welches mit einem sehr grossen Sichtfeld aufgenommen ist, insbesondere mit einem Sichtfeld von 360° in horizontaler Richtung. Besonders geeignet sind Abbildungsmerkmale, welche einer markanten Stelle der Messumgebung entsprechen, beispielsweise eine Ecke oder eine Farbgrenze. Im Schritt 11b wird anhand des extrahierten Abbildungsmerkmals ein vergleichsweise eng begrenzter Bereich der Messumgebung spezifiziert und in einem weiteren Umgebungsabbild aufgenommen. Z.B. wird die Einheit 2 zum Aufnehmen eines Umgebungsabbildes auf die markante Stelle der Messumgebung ausgerichtet, welche dem extrahierten Abbildungsmerkmal entspricht und mit der Einheit 2 bei einem kleineren Sichtfeld bzw. Bildwinkel als beim zweiten Umgebungsabbild das weitere Umgebungsabbild aufgenommen, wobei im weiteren Umgebungsabbild die Messumgebung höher aufgelöst ist als im zweiten Abbild. Alternativ verfügt das geodätische Vermessungsgerät 1 über eine weitere Einheit 2' zum hochauflösenden Aufnehmen eines Umgebungsabbilds mit kleinem Bildwinkel (und damit eines kleinen Umgebungsbereiches) und diese Einheit 2' wird zum Aufnehmen des weiteren Umgebungsabbilds verwendet. Für die weiteren Verfahrensschritte 12 bis 15 wird das weitere Umgebungsabbild als zweites Umgebungsabbild benutzt, d.h. es ersetzt das ursprüngliche zweite Umgebungsabbild und die Verfahrensschritte Matchen, Richtungsbestimmen, Skalierungsfaktorbestimmen und Bestimmen des Positions- und der Orientierungsversatz ΔP bzw. ΔO werden unter Verwendung des weiteren Umgebungsabbilds als zweites Umgebungsabbild vollzogen.

Die Verfahrensschritte werden anhand der Figuren 3a bis 5 beispielhaft näher beschrieben.

Fig. 3a zeigt in einer Vogelperspektive eine erste und eine zweite Stationierung S1 und S2 als zweidimensionales geometrisches Schema. Die beiden Stationierungen weisen einen Positionsversatz ΔP auf, in der Figur dargestellt durch den Versatz Δx in x-Richtung und den Versatz Δy in y-Richtung, und einen Orientierungsversatz ΔO, in der Figur dargestellt durch den Versatz ΔO in der xy-Ebene. Die (nicht dargestellte) Einheit 2 zum Aufnehmen eines Umgebungsabbildes weist in diesem Beispiel ein Sichtfeld (engl.: field of view) FOV1 bzw. FOV2 auf, welches durch den Bildwinkel α1 bzw. α2 gekennzeichnet ist, der im Beispiel jeweils ca. 90° beträgt.

Durch das jeweilige Sichtfeld FOV1 bzw. FOV2 (dargestellt als Schnitt einer xy-Ebene mit dem 3D-Sichtkegel der Einheit 2) wird jeweils ein zusammenhängender Bereich der Messumgebung festgelegt, von dem ein Umgebungsabbild aufgenommen wird. Im Beispiel erfolgt ein Aufnehmen (Schritt 10 bzw. 11 aus Fig. 2) in der ersten Stationierung S1 eines ersten Bereichs (Pfeil 4) und in der zweiten Stationierung S2 eines zweiten Bereichs (Pfeil 4'), wobei sich in den Bereichen ein Objekt 5 (z.B. eine Gebäudewand) als Teil der Messumgebung befindet. Wegen der unterschiedlichen Stationierungen S1 und S2 sind der erste Bereich (Pfeil 4) und der zweite Bereich (Pfeil 4') nicht identisch. Die Orientierungen O1 und O2 sind jedoch so gewählt, dass sich die Sichtfelder FOV1 und FOV2 überschneiden (in der Figur beispielhaft durch eine grau markierte Schnittebene FOVc dargestellt), so dass die beiden Bereiche (Pfeil 4 bzw. 4') sich teilweise überdecken (dicker Pfeil 4"), wodurch der erste Bereich (Pfeil 4) und der zweite Bereich (Pfeil 4') eine Vielzahl gemeinsamer Messumgebungspunkte aufweisen. Somit bilden ein erstes, von der ersten Stationierung S1 aus aufgenommene, Umgebungsabbild und ein zweites, von der zweiten Stationierung S2 aus aufgenommene Umgebungsabbild, teilweise den gleichen Bereich (Pfeil 4") der Messumgebung ab.

Das erfindungsgemässe Verfahren ist nicht auf bestimmte Sichtfeld- bzw. Bildwinkelgrössen beschränkt. Fig. 3b zeigt ein geodätisches Vermessungsgerät 1, z.B. ein Theodolit, in einer ersten Stationierung S1 und einer dazu positions- und orientierungsversetzten zweiten Stationierung S2. Z.B. soll ein geodätisches Vermessen der Umgebungsobjekte 7, 7' und 7" erfolgen, wobei nicht alle zu vermessenden Punkte von der ersten Stationierung S1 anzielbar sind (z.B. da das Objekt 7' das Objekt 7'' verdeckt), weshalb der Theodolit nach Abschluss der Vermessung von der ersten Stationierung S1 aus zur zweiten Stationierung S2 versetzt wird, um von dort aus weitere bzw. fehlende Punkte der Objekte 7, 7' und 7" zu vermessen. Die Position P1 und die Orientierung O1 werden dabei nach einem dem Fachmann bekannten Verfahren präzise bestimmt.

Um nun die aktuelle Position P2 und Orientierung O2 nicht ebenfalls mit einem solchen zeitaufwändigen Verfahren nach dem Stand der Technik bestimmen zu müssen, wird das erfindungsgemässe Verfahren durchgeführt. Hierzu erfolgt erfindungsgemäss jeweils in der ersten und zweiten Stationierung S1 bzw. S2 ein Aufnehmen eines ersten bzw. zweiten Umgebungsabbildes durch die Einheit 2, welche in horizontaler (also bezogen auf die xy-Ebene) Richtung um 360° rotiert wird (Pfeil 6) bei einem vertikalen (also bezogen auf die xz-Ebene) Bildwinkel β1 bzw. β2 (Öffnungswinkel des Sichtkegels der Einheit 2), so dass als Umgebungsabbild jeweils ein Panoramabild erzeugt wird. Bei dem Abbild handelt es sich je nach Einheit 2 um ein zweidimensionales Panoramabild oder ein dreidimensionales Range-Panorama-Bild. Abgebildet wird jeweils derjenige Bereich der Messumgebung, welcher sich im um die z-Achse rotierenden Sichtkegel befindet. Es ergibt sich somit bei derartigen 360°-Aufnahmen i.d.R. eine relativ grosse Überlappung des ersten und des zweiten Bereichs, vor allem unter den Voraussetzungen eines relativ geringen Versatzes der beiden Positionen P1 und P2 in z-Richtung und grosser Bildwinkel β1 und β2. Es ergeben sich eine Vielzahl gemeinsamer Messumgebungspunkte 8, 8' und 8" der Umgebungsobjekte 7, 7' und 7".

Im Vergleich zum Beispiel nach Fig. 3a sind im Beispiel nach Fig. 3b noch geringere Anforderungen an das Aufstellen des Vermessungsgeräts 1 in der zweiten Stationierung S2 gestellt, da mit dem Aufnehmen von Panoramabildern jegliches Ausrichten in einer xy-Ebene entfällt. Ein Benutzer muss lediglich die Höhe und vertikale Ausrichtung des Vermessungsgeräts 1 bzw. der Einheit 2 derart grob einstellen, dass im ersten und zweiten Panorama-Umgebungsabbild teilweise gleiche Umgebungsbereiche erfasst werden, was je nach Grösse des vertikalen Bildwinkels β1 bzw. β2 mehr oder weniger ungenau erfolgen kann. Bei sehr grossem vertikalem Bildwinkel β1 bzw. β2 ist das Vermessungsgerät nahezu voraussetzungslos aufstellbar.

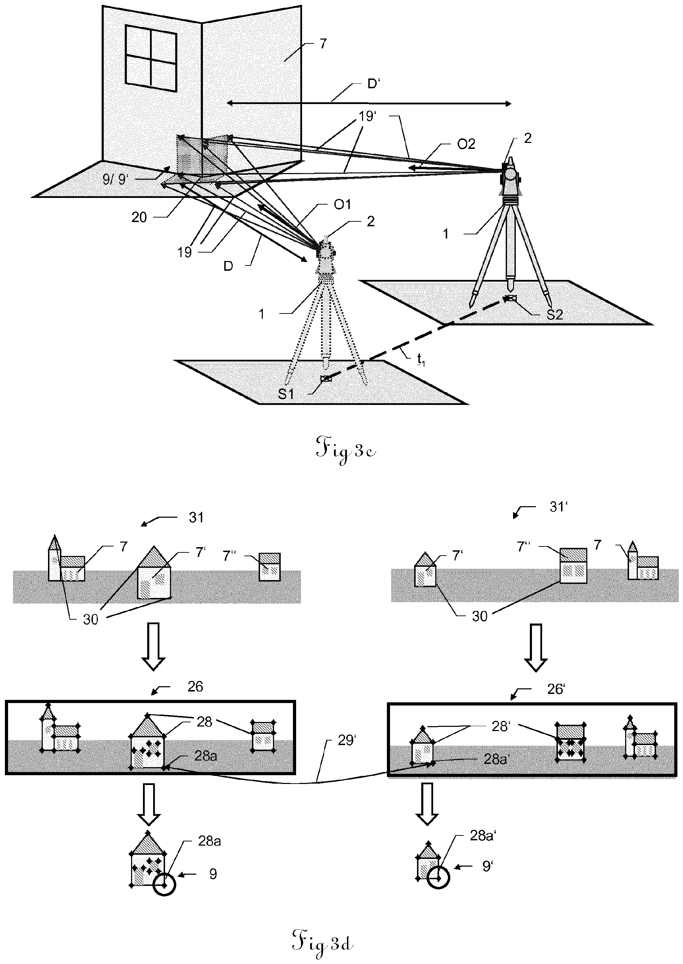

Fig. 3c zeigt ein Aufnehmen von Umgebungsabbildern, bei denen im Gegensatz zum Beispiel nach Fig. 3b nur relativ kleine Bereiche der Messumgebung aufgenommen werden. Das Vermessungsgerät 1 nimmt mittels der Einheit 2 zum Aufnehmen eines Umgebungsabbilds in der ersten Stationierung S1 mit der ersten Orientierung O1 einen eng begrenzten ersten Bereich 9 um eine Ecke 20 eines Gebäudes als Objekt 7 der Messumgebung auf. Von der zweiten Stationierung S2 aus mit der zweiten Orientierung O2 nimmt die Einheit 2 gezielt ebenfalls die Ecke 20 des Gebäudes auf, so dass der zweite Bereich 9' nahezu identisch mit dem ersten Bereich 9 ist. Erfindungsgemäss eignen sich besonders solche eng begrenzten Umgebungsbereiche 9 bzw. 9', welche Objekte wie die Gebäudeecke 20 aufweisen, denen eine Ausrichtung im Raum leicht zugeordnet werden kann.

Im Beispiel ist die Einheit 2 zum Aufnehmen eines Umgebungsabbildes ausgebildet als Laserscanmodul. Dementsprechend werden beim Aufnehmen die Entfernungen (symbolisiert durch Pfeile D bzw. D') und Richtungen 19 bzw. 19' in Bezug zum internen Bezugssystem des Vermessungsgeräts 1 zu den aufgenommenen Messumgebungspunkten der Bereiche 9 bzw. 9' bestimmt. Optional erfolgt dabei zur Steigerung der Genauigkeit und/oder Zuverlässigkeit ein Erfassen der Intensität des von Messumgebungspunkten reflektieren Laserlichts.

Ein gezieltes Aufnehmen eines eng begrenzten zusammenhängenden Umgebungsbereichs 9, 9' erfordert im Unterschied zum Beispiel nach Fig. 3b ein grobes Ausrichten des Vermessungsgeräts 1, im Allgemeinen in alle drei Raumrichtungen. Dies erfolgt erfindungsgemäss durch automatisches Spezifizieren bzw. Ausrichten, wozu in der Steuer- und Auswerteeinheit 50 Informationen über den ersten zusammenhängenden Bereich (Lage relativ zur ersten Position P1, Ausrichtung relativ zur ersten Orientierung O1, Ausdehnung) und über die präzise erste Position P1 und Orientierung O1 sowie Informationen über eine grobe zweite Position und Orientierung bzw. über einen groben Positions- und Orientierungsversatz vorhanden sind, so dass die Steuereinheit mittels vermessungsgeräteinterne Motoren die Einheit 2 auf den abzubildenden Messumgebungsbereich ausrichten und ggf. das Sichtfeld FOV2 entsprechend anpassen kann. Solche Informationen über eine ungefähre Position bzw. Orientierung sind beispielsweise durch Positions- und Richtungssensoren oder durch Erfassen von bekannten, erfassbaren Zielpunkten der Messumgebung ermittelbar. Alternativ wird in einem zusätzlichen Schritt von der aktuellen Stationierung S2 aus ein relativ grosser Umgebungsbereich aufgenommen, insbesondere ein Panoramabild, und durch abbildbasierte Positions- und Orientierungsgrobbestimmung, wie sie z.B. in der Patentanmeldung US 2013/0243250 A1 beschrieben ist, vorzugsweise unter Heranziehung des ersten Umgebungsabbildes, die Position und Orientierung grob ermittelt. Das Spezifizieren des zweiten Bereichs 9' erfolgt anhand des groben Positions- und Orientierungsversatzes bzw. der groben aktuellen Position und Orientierung und anhand einer bekannte Position des ersten Bereichs 9.

Fig. 3d zeigt eine alternative Methode zum automatischen gezielten Spezifizieren eines eng begrenzten Bereichs 9 bzw. 9' der Messumgebung. Verwendet werden zunächst weiträumige Bereiche 31 und 31' der Messumgebung. Oben links ist eine 360°-Ansicht der Messumgebung als erster Umgebungsbereichs 31 dargestellt, wie sie sich von einer ersten Stationierung S1 mit einer ersten Orientierung O1 ergibt, oben rechts eine 360°-Ansicht eines zweiten Umgebungsbereichs 31', wie sie sich von einer zweiten Stationierung S2 mit einer zweiten Orientierung O2 ergibt. Zu erkennen sind jeweils drei Gebäude als Objekte 7, 7' und 7" mit Gebäudeecken als herausgehobene Messumgebungspunkte 30.

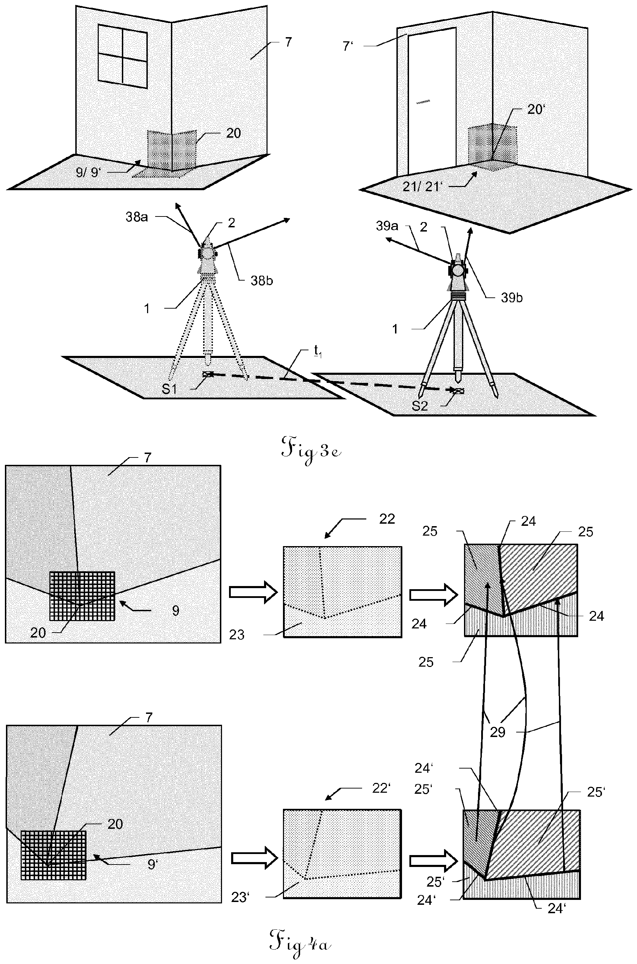

Von diesen grossen Bereichen 31 und 31' werden Panoramaabbilder 26 bzw. 26', z.B. ein 360°-Scans, erstellt (vgl. Fig. 4b). In den Abbildern 26 bzw. 26' werden mittels eines abbildverarbeitenden Algorithmus Punktmerkmale 28 bzw. 28' wie z.B. geometrische Primitiven oder Punkte besonderer Helligkeit extrahiert, im Beispiel Ecken der Gebäude. Wenigstens ein Punktmerkmal 28a aus dem einen Abbild 26 wird mit dem entsprechenden Punktmerkmal 28a' des anderen Abbilds 26' gematcht (Pfeil 29'). Anschliessend wird anhand dieses einen gematchten Punktmerkmals 28a bzw. 28a', welche einem gemeinsamen herausgehobenen Messumgebungspunkt 30 entsprechen, jeweils ein erster und zweiter eng begrenzter Bereich 9 bzw. 9' der Messumgebung spezifiziert. Im Beispiel ist dies die Stelle um eine der Gebäudeecken, die sich am Boden befinden. Diese kleinräumigen Bereiche 9 bzw. 9' werden dann in weiteren Umgebungsabbildern 22 bzw. 22' (siehe Fig. 4a) gezielt aufgenommen, wobei diese weiteren Umgebungsabbilder 22 bzw. 22' vorzugsweise eine höhere Auflösung aufweisen als die Panoramaabbilder 26 bzw. 26'. Für das weitere Verfahren dienen dann nicht die Panoramaabbilder 26 bzw. 26' als erstes bzw. zweites Umgebungsabbild, sondern es werden die weiteren Umgebungsabbildern 22 bzw. 22' als erstes bzw. zweites Umgebungsabbild verwendet, was aufgrund der vergleichsweise hohen Auflösung Vorteile hinsichtlich der Präzision bietet. Alternativ wird lediglich für die zweite Stationierung S2 ein eng begrenzter Bereich 9' spezifiziert und/oder lediglich das von der zweiten Stationierung S2 aufgenommene Panoramaabbild 26' durch das weitere Umgebungsabbild 26' als zweites Umgebungsabbild für das weitere Verfahren ersetzt.

Fig. 3e zeigt ein weiteres Beispiel für das Aufnehmen von Umgebungsabbildern von einer ersten Stationierung S1 und einer zweiten Stationierung S2 aus. Im vorliegenden Fall wird jeweils nicht nur ein einziger eng begrenzter zusammenhängender Bereich 9 bzw. 9' bei einem Umgebungsobjekt 7 von der ersten bzw. zweiten Stationierung S1 bzw. S2 aus aufgenommen, sondern jeweils noch ein weiterer eng begrenzter zusammenhängender Bereich 21 bzw. 21' um eine Ecke 20' eines weiteren Gebäudes als Objekt 7'. Ein Aufnehmen mehrerer Bereiche 9 und 21 bzw. 9' und 21' ist hinsichtlich Genauigkeit und Robustheit der Bestimmung des Positions- und Orientierungsversatzes von Vorteil. Der erste Bereich 9 bzw. 9' liegt dabei jeweils in einer ersten Aufnahmerichtung 38a bzw. 39a, der zweite Bereich 21 bzw. 21' in einer zweiten Aufnahmerichtung 38b bzw. 39b. Das erste und das zweite Umgebungsabbild werden jeweils aus zwei Einzelaufnahmen des ersten und zweiten Bereichs 9 und 21 bzw. 9' und 21' zusammengesetzt oder alternativ werden aus jeweils einer Aufnahme die dem ersten und zweiten Bereichs 9 und 21 bzw. 9' und 21' entsprechenden Abbildzonen segmentiert.

Fig. 4a zeigt ein erstes Beispiel für das erfindungsgemässe Matchen (Schritt 12 aus Fig. 2) von übereinstimmenden Abbildelementen eines ersten Umgebungsabbildes 22 und eines zweiten Umgebungsabbildes 22'. Im linken Teil der Figur 4a ist jeweils ein Ausschnitt der Messumgebung mit einem Teil eines Gebäudes als Messumgebungsobjekt 7 dargestellt. Im oberen linken Teil ist eine Ansicht dargestellt, wie sie sich aus der ersten Stationierung S1 aus Figur 3c ergibt, im unteren Ausschnitt eine Ansicht, wie sie sich aus der zweiten Stationierung S2 aus Figur 3c ergibt. Der jeweils aufgenommen eng begrenzte Umgebungsbereich 9 bzw. 9' umfasst analog zu Figur 3c das Umfeld der Gebäudeecke 20. Die eng begrenzten Umgebungsbereiche 9 bzw. 9' sind beispielsweise wie zu Fig. 3d beschrieben gezielt spezifiziert.

In den mittleren Bildern der Figur 4a ist oben das erste Umgebungsabbild 22 dargestellt, welches sich aus dem Aufnehmen des ersten Bereichs 9 ergibt, und unten das zweite Umgebungsabbild 22', welches sich aus dem Aufnehmen des zweiten Bereichs 9' ergibt. Die Umgebungsabbilder sind im Beispiel durch Laserscans erstellt, so dass Punktwolken 23 bzw. 23' vorliegen.

Als Abbildelemente dienen im Beispiel Abbildmerkmale, welche aus beiden Abbildern 22 und 22' mittels eines abbildverarbeitenden Algorithmus extrahiert werden (rechter Teil der Figur 4a). Im vorliegenden Fall werden geometrische Primitiven (Linien 24 bzw. 24' und/oder Ebenen 25 bzw. 25') segmentiert. Merkmale 24' bzw. 25' des Abbilds 22' werden anschliessend gematcht mit dem jeweils korrespondierenden Merkmal 24 bzw. 25 des Abbilds 22 (Pfeile 29). Liegen mehrere aufgenommene Bereiche 9/9' bzw. 20/20' vor wie in der Konfiguration nach Figur 3d, werden alternativ die Schnittpunkte der Linien 24 bzw. 24' als Punktmerkmale extrahiert und gematcht. Alternativ erfolgt das Matchen ohne Merkmalsextraktion, indem zu Punkten der Punktwolke 23 korrespondierende Punkte der Punktwolke 23' gematcht werden.

Fig. 4b zeigt ein zweites Beispiel für das erfindungsgemässe Matchen von übereinstimmenden Abbildelementen eines ersten Umgebungsabbildes 26 und eines zweiten Umgebungsabbildes 26'. In Figur 4b ist oben links eine Ansicht eines ersten Umgebungsbereichs 31 dargestellt, wie sie sich von einer ersten Stationierung S1 mit einer ersten Orientierung O1 ergibt, oben rechts eine Ansicht eines zweiten Umgebungsbereichs 31', wie sie sich von einer zweiten Stationierung S2 mit einer zweiten Orientierung O2 ergibt. Zu erkennen sind jeweils drei Gebäude als Objekte 7, 7' und 7" mit Gebäudeecken als herausgehobene Messumgebungspunkte 30. Im Unterschied zu den Bereichen 9 und 9' aus dem Beispiel nach Fig. 4a sind die Bereiche 31 und 31' grossräumig und umfassen jeweils den Umkreis der Messumgebung.

In der Figur 4b unten sind das erste Abbild 26 und das zweite Abbild 26' des ersten bzw. zweiten Bereichs 31 bzw. 31' dargestellt. Im Gegensatz zu den Abbildern 22 bzw. 22' aus der vorherigen Figur handelt es sich bei den Abbildern 26 bzw. 26' um Panoramafotografien, erstellt mit einer Digitalkamera als Einheit 2, so dass die relativ grossen zusammenhängenden Bereiche 31 bzw. 31' der Messumgebung abgebildet sind. Im vorliegenden Beispiel werden in den Abbildern 26 bzw. 26' als Abbildelemente mittels eines abbildverarbeitenden Algorithmus Punktmerkmale 28 bzw. 28' extrahiert, welche den besonderen Messumgebungspunkten 30 entsprechen. Anschliessend werden in beiden Abbildern 26 und 26' korrespondierende Punktmerkmale 28 bzw. 28' gematcht (Pfeile 29) .

Fig. 5 zeigt ein Beispiel für das erfindungsgemässe Bestimmen des Positions- und Orientierungsversatzes anhand übereinstimmender Abbildelemente 28 bzw. 28'. Dargestellt ist eine Situation, welcher derjenigen nach Figur 4b entspricht. Aus der Vogelperspektive sind die Objekte 7, 7' und 7" mit dem Messumgebungspunkten 30 und die beiden Stationierungen S1 und S2 des Vermessungsgeräts 1 zu sehen. Den Messumgebungspunkten 30 entsprechen in den Abbildern 26 bzw. 26' die einander korrespondierenden Punktmerkmale 28 bzw. 28'. Die Einheit 2 zum Aufnehmen eines Umgebungsabbilds hat ein Projektionszentrum, dessen Lage 33 bzw. 33' im Beispiel mit dem Nullpunkt des inneren Bezugssystems des Vermessungsgeräts 1 zusammenfällt. Durch die Lage 33 bzw. 33' des Projektionszentrums und die Lage jeweils eines Abbildelements 28 bzw. 28' im ersten bzw. zweiten Abbild 26 bzw. 26' ist jeweils eine Richtung definiert (Pfeile 32a bzw. 32a'), welche die Richtung 32 bzw. 32' von der jeweiligen Nullpunktslage zu demjenigen Messumgebungspunkt 30 ist, welcher durch zwei korrespondierende Abbildelemente 28 bzw. 28' abgebildet ist. Anhand der Lage des jeweiligen Punktmerkmals 28 bzw. 28' im Abbild 26 bzw. 26' erfolgt dementsprechend mit Kenntnis der Lage des Projektionszentrums 33 bzw. 33' der abbildaufnehmenden Einheit 2 nach bekannten geometrischen Prinzipien, beispielsweise unter Verwendung eines 7- bzw. 8-Punktalgorithmus, Bündelblockausgleichs oder ICP-Algorithmus, das Bestimmen (Schritt 13 aus Figur 2) der Richtungen 32 bzw. 32' von den Stationierungen S1 bzw. S2 zu allen oder einem Teil derjenigen Messumgebungspunkten 30, welche korrespondierenden Punktmerkmalen 28 bzw. 28' entsprechen.

Zur Bestimmung des Skalierungsfaktors (Schritt 14 aus Figur 2) erfolgt das berührungslose Messen der Entfernung (gekennzeichnet durch Pfeil D') von der zweiten Stationierung S2 aus zu wenigstens einem dieser Messumgebungspunkte, im Beispiel zum Punkt 30 des Objekts 7. Das berührungslose Messen erfolgt im Beispiel mit der Laserentfernungsmessfunktionalität des Vermessungsgeräts 1 unter Zuhilfenahme dessen Winkelmessfunktionalität. Der Positionsversatz ΔP und der Orientierungsversatz ΔO zwischen der ersten Stationierung S1 und der zweiten Stationierung S2 werden nach bekannten geometrischen Prinzipien grundsätzlich analog zu einem Rückwärtsschnitt anschliessend anhand der Richtungen 32 und 32' und der wenigstens einen Entfernung (Pfeil D') bestimmt, wobei eine Genauigkeit im Subzentimeterbereich erreicht wird.

Liegen Umgebungsabbilder 22 bzw. 22' aus Punktwolken 23 bzw. 23' vor (siehe Figur 4a), erfolgt das Bestimmen der Richtungen anhand der Lage eines Abbildelements 24 bzw. 24' und/oder 25 bzw 25' im Abbild 22 bzw. 22' und das Messen wenigstens einer Entfernung (Pfeil D') nicht zu gesonderten gematchten Abbildelementen 24 bzw. 24' und/oder 25 bzw 25'. Mit dem Erstellen der Punktwolke 23 bzw. 23' liegen die Richtungen und Entfernungen zu allen abgebildeten Messumgebungspunkten bereits vor, also auch zu denjenigen Messumgebungspunkten 30, die für das Bestimmen des Positionsversatzes ΔP und des Orientierungsversatzes ΔO Verwendung finden, weil sie als korrespondierende Abbildelemente bzw. als Teil korrespondierender Abbildmerkmale abgebildet sind. Ist mit der Entfernungsmessfunktionalität des Vermessungsgeräts 1 ein präziseres Messen der Entfernung D' möglich als durch ein laseroptisches Messen mit dem Laserscanmodul (Einheit 2), erfolgt alternativ zur weiteren Erhöhung der Genauigkeit analog zum obigen Beispiel ein laseroptisches Messen der Entfernung D' anhand der Entfernungsmessfunktionalität des Vermessungsgeräts 1 zu wenigstens einem gematchten Abbildelement 24 bzw. 24' und/oder 25 bzw 25'. Alternativ erfolgt zum Bestimmen der Entfernung D' mit dem Laserscanmodul ein erneutes und ggf. gezieltes kleinräumiges Messen mit höherer Messgenauigkeit/Auslösung als beim Erstellen der Punktwolke 23'.

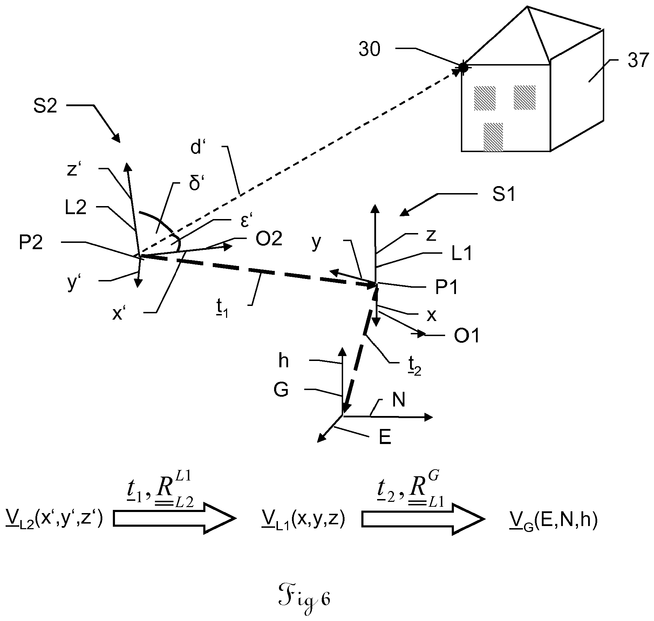

Fig.6 ist ein Beispiel für das Transformieren von Lagedaten eines Messumgebungspunktes 30 von der zweiten Stationierung S2 auf die erste Stationierung S1. Durch das erfindungsgemässe Bestimmen des Positions- und den Orientierungsversatz ΔP bzw. ΔO sind die Transformationsparameter (Translationsvektor $\underline{t}_1$ und Rotationsmatrix $\underline{\underline{R}}_{L2}^{L1}$ ) zwischen dem ersten lokalen Bezugssystem L1 mit den Achsen x,y,z und dem zweiten lokalen Bezugssystem L2 mit den Achsen x',y',z' bzw. zwischen der ersten und der zweiten Stationierung S1 bzw. S2 bekannt bzw. bestimmbar. Die Orientierung O1 bzw. O2 stimmt jeweils mit der x- bzw. x'-Achse überein. Mit den Transformationsparametern lassen sich die Positionsdaten $\underline{V}_{L2}$ eines Messumgebungspunktes 30, welche von der zweiten Stationierung S2 aus und somit in Bezug zum zweiten Bezugssystem L2 mit dem Nullpunkt P2 bestimmt sind, auf die erste Stationierung S1 übertragen, so dass sie als Positionsdaten $\underline{V}_{L1}$ im ersten Bezugssystem L1 mit dem Nullpunkt P1 vorliegen.

Die Positionsdaten $\underline{V}_{L2}$ aus den Koordinaten x',y',z' sind mit der Entfernungs- und Winkelmessfunktionalität des Vermessungsgeräts 1 über eine Messung einer Entfernung d' und zweier Winkel δ' und ε' bestimmt.

Mit dem Translationsvektor $\underline{t}_1$ und Rotationsmatrix $\underline{\underline{R}}_{L2}^{L1}$, welche anhand der Richtungen 19 bzw. 19' oder 32 bzw. 32' und der gemessenen Entfernung D' bestimmt sind, werden die Positionsdaten $\underline{V}_{L1}$ den Koordinaten x,y,z berechnet: $\underline{V}_{L1} = \underline{\underline{R}}_{L2}^{L1} \cdot \underline{V}_{L2} + \underline{t}_1$. Durch das erfindungsgemässe Verfahren ist also die räumliche Lage eines Messumgebungspunktes 30, welche von der Stationierung S2 aus vermessen wird, in Bezug auf die erste Stationierung S1 bestimmt.

Ist weiter das erste Bezugssystem L1 georeferenziert, was bedeutet, dass Transformationsparameter aus einem Translationsvektor $\underline{t}_2$ und einer Rotationsma-

trix $\underline{\underline{R}}{}^{G}_{L1}$ bekannt sind, welche eine Transformation des ersten Bezugsystems L1 in ein absolutes, äusseres Bezugsystem G mit den Achsen N (North), E (East), h (height) ermöglichen, werden in einer Weiterbildung des erfindungsgemässen Verfahrens die Positionsdaten $\underline{V}_{L1}$ in die Positionsdaten $\underline{V}_G$ aus den Koordinaten E,N,h im äusseren Bezugssystem G transformiert:

$$\underline{V}_G = \underline{\underline{R}}{}^{G}_{L1} \cdot \underline{V}_{L1} + \underline{t}_2$$

. Ist das Vermessungsgerät 1 in der ersten Stationierung S1 am äusseren Bezugssystem ausgerichtet und so positioniert, dass die xy-Ebene exakt parallel zur Bodenebene (EN-Ebene) ist, vereinfacht sich die Transformation vom ersten Bezugssystem L1 zum Bezugssystem G zu einer Translation in z- bzw. h-Richtung. Durch das erfindungsgemässe Verfahren erfolgt also die Angabe der räumlichen Lage eines Messumgebungspunktes 30, welche von der Stationierung S2 aus vermessen wird, in Bezug auf ein äusseres, absolutes Referenzsystem G, so dass die gemessenen Positionsdaten eines Messumgebungspunktes 30 georeferenziert sind.

**Patentansprüche**

1. Verfahren zum präzisen Bestimmen des Positionsversatzes (ΔP) und Orientierungsversatzes (Δ0) einer zweiten Stationierung (S2), definiert durch eine zweite Position (P2) und eine zweite Orientierung (O2), zu einer ersten Stationierung (S1), definiert durch eine erste Position (P1) und eine ersten Orientierung (O1), eines eine Laserentfernungsmessfunktionalität und Winkelmessfunktionalität aufweisenden geodätischen Vermessungsgeräts (1), insbesondere eines Theodoliten oder einer Totalstation, wobei die erste Stationierung (S1)und die zweite Stationierung (S2) sich in der gleichen Messumgebung befinden, und wobei das Bestimmen des Positionsversatzes (ΔP) und Orientierungsversatzes (Δ0) derart präzise erfolgt, dass die zweite Position (P2) und die zweite Orientierung (O2) mit geodätischer Genauigkeit bestimmbar sind; mit

    • Aufnehmen eines zweiten Umgebungsabbildes (22', 26') mindestens eines zweiten zusammenhängenden Bereichs (4', 9', 21', 31') der Messumgebung von der zweiten Stationierung (S2) aus,
    • Matchen von Abbildelementen (24', 25', 28') des zweiten Umgebungsabbildes (22', 26') mit korrespondierenden Abbildelementen (24, 25, 28) eines ersten Umgebungsabbildes (22, 26), welches von der ersten Stationierung (S1) aus aufgenommen ist und mindestens einen ersten zusammenhängenden Bereich (4, 9, 21, 31) der Messumgebung abbildet, wobei der erste und der zweite zusammenhängende Bereich (4, 9, 21, 31, 4', 9', 21', 31') eine Vielzahl gemeinsamer Messumgebungspunkte (30) aufweisen,
    • Bestimmen der Richtungen (19, 32, 19', 32') im inneren Bezugssystem (L1, L2) des geodätischen Vermessungsgeräts (1) jeweils von der ersten und der zweiten Stationierung (S1, S2) aus zu Messumgebungspunkten (30), welche korrespondierenden Abbildelementen (24, 25, 28, 24', 25', 28') entsprechen, anhand der Lage des entsprechenden Abbildelements (24, 25, 28, 24', 25', 28') im jeweiligen Umgebungsabbild (22, 26, 22', 26'),
    • Bestimmen eines Skalierungsfaktors

        • mittels präzisem berührungslosem, insbesondere laseroptischen, Messen der Entfernung (D') von der zweiten Stationierung (S2) aus zu wenigstens einem richtungsbestimmten Messumgebungspunkt (30), insbesondere wobei das präzise berührungslose Messen der Entfernung (D') automatisch erfolgt, wobei das geodätische Vermessungsgerät (1) anhand der bestimmten Richtung (19, 32, 19', 32') auf den zu messenden Messumgebungspunkt (30) automatisch ausgerichtet wird, oder
        • mittels eines im ersten und/oder zweiten Umgebungsabbild abgebildeten Objekts bekannter Grösse, insbesondere einer Messlatte

        • präzisem Bestimmen des Positionsversatzes (ΔP) und Orientierungsversatzes (ΔO) mittels geometrischer Prinzipien bzw. Algorithmen anhand der in Bezug zur ersten und zur zweiten Stationierung (S1, S2) bestimmten Richtungen (19, 32, 19', 32') und des Skalierungsfaktors d.h. Abbildungsmassstabs.

2. Verfahren nach Anspruch 1,
**dadurch gekennzeichnet, dass**
die erste Position (P1) und die erste Orientierung (O1) in Bezug auf ein äusseres Bezugssystem (G) präzise bestimmt sind, insbesondere die erste Position (P1) und die erste Orientierung (O1) präzise georeferenziert sind.

3. Verfahren nach einem der vorherigen Ansprüche,
**dadurch gekennzeichnet, dass**
der Positionsversatz (ΔP) und der Orientierungsversatz (ΔO) in Bezug auf alle sechs Freiheitsgrade bestimmt werden.

4. Verfahren nach einem der vorherigen Ansprüche,
**gekennzeichnet durch**

    • Aufnehmen eines weiteren Umgebungsabbilds mindestens eines weiteren zusammenhängenden Bereichs (9', 21') der Messumgebung von der zweiten Stationierung (S2) aus, wobei der weitere zusammenhängende Bereich anhand von Abbildmerkmalen spezifiziert wird, welche aus dem ersten und/oder zweiten Umgebungsabbild extrahiert sind, insbesondere wobei das weitere Umgebungsabbild höher auflösend ist als das zweite Umgebungsabbild, und
• Vollziehen der Verfahrensschritte

    o Matchen von Abbildelementen,
    o Bestimmen der Richtungen,
    o Bestimmen eines Skalierungsfaktors und
    o präzisem Bestimmen des Positionsversatzes ($\Delta$P) und Orientierungsversatzes ($\Delta$O)

unter Verwendung des weiteren Umgebungsabbildes als zweites Umgebungsabbild.

5. Verfahren nach einem der vorherigen Ansprüche, **dadurch gekennzeichnet, dass**
das Aufnehmen eines Umgebungsabbildes (22, 26, 22', 26')

    • durch Fotografieren oder Laserscannen, insbesondere mit Erfassen der reflektierten Laserlichtintensität, erfolgt, insbesondere wobei dabei aufgenommene Messumgebungspunkte (8,8',8") den jeweiligen zusammenhängenden Bereich (4, 9, 21, 31, 4', 9', 21', 31') der Messumgebung mit einer vorgegebenen Mindestdichte abdecken und/oder
    • bezogen auf eine, insbesondere relativ zu einem äusseren absoluten Bezugssystem (G) horizontale, Aufnahmerichtung, über einen Winkel von wenigstens 1.5°, insbesondere wenigstens 45°, im Speziellen zumindest annähernd 360°, erfolgt, insbesondere wodurch als Umgebungsabbild (22', 26', 22, 26) ein Panoramabild, ein Panorama-3D-Scan oder ein Range-Panorama-Image erzeugt wird.

6. Verfahren nach einem der vorherigen Ansprüche, **dadurch gekennzeichnet, dass**
Abbildelemente einzelne Abbildpunkte, insbesondere Pixel oder 3D-Punkte der Umgebungsabbilder (22, 26, 22', 26') sind oder Abbildelemente Abbildmerkmale (24, 25, 28, 24', 25', 28') sind, welche aus den Umgebungsabbildern mittels Abbildverarbeiten, insbesondere kanten- und/oder regionenbasierter Segmentierung, extrahiert werden, insbesondere wobei Abbildmerkmale durch geometrische Primitive und/oder Deskriptoren repräsentiert werden.

7. Verfahren nach einem der vorherigen Ansprüche, **dadurch gekennzeichnet, dass**

das Matchen von Abbildelementen erfolgt mittels

    • eines iterativen Matching-Algorithmus, insbesondere eines Iterative-Closest-Point-Algorithmus, oder
    • eines Dense-Matching-Algorithmus, insbesondere eines Semi-Global-Matching-Algorithmus, oder
    • Sum-of-Squared-Differences oder Least-Squares-Algorithmus, oder
    • eines merkmalsbasierten Algorithmus, insbesondere basierend auf einem Scale-Invariant-Feature-Transform-Algorithmus und/oder einem Speeded-Up-Robust-Features-Algorithmus.

8. Verfahren nach einem der vorherigen Ansprüche, **dadurch gekennzeichnet, dass**
ein Transformieren von Positionsdaten ($V_{L2}$) von vermessenen Messumgebungspunkten (30), welche mittels der Laserentfernungsmessfunktionalität und Winkelmessfunktionalität von der zweiten Stationierung (S2) aus bestimmt sind, anhand des bestimmten Positionsversatzes ($\Delta$P) und Orientierungsversatzes ($\Delta$O) derart erfolgt, dass die Positionen der vermessenen Messumgebungspunkte (30) relativ zur ersten Position (P1) und ersten Orientierung (O1) vorliegen.

9. Verfahren nach einem der vorherigen Ansprüche, **gekennzeichnet durch**
automatisches gezieltes Spezifizieren des zweiten und/oder ersten zusammenhängenden Bereichs (4', 9', 21', 31') anhand grober Positions- und Orientierungsinformation.

10. Verfahren nach einem der vorherigen Ansprüche, **gekennzeichnet durch**
ein Transferieren der Daten der Umgebungsabbilder (22', 26', 22, 26) oder der Abbildelemente (24', 25', 28', 24, 25, 28) und vermessungsgeräteexternes Vollziehen von Verfahrensschritten, insbesondere auf einem Smartphone oder durch Cloud-Services.

11. Verfahren nach einem der vorherigen Ansprüche, **gekennzeichnet durch**
ein automatisiertes, insbesondere auch automatisches, Vollziehen einzelner, insbesondere aller, Verfahrensschritte.

12. Geodätisches Vermessungsgerät (1) mit

    • einem auf einer Basis angeordneten, um eine Schwenkachse schwenkbaren Aufbau,
    • einer Anzieleinheit, wobei die Anzieleinheit wenigstens eine eine optische Zielachse definierende Emissionseinheit zur Emission eines Laserstrahls und eine Entfernungsmessfunktionalität zur präzisen Messung einer Entfernung zu einem Objekt aufweist,

• einer Winkelmessfunktionalität zur präzisen Erfassung zumindest eines durch eine relative Schwenkposition des Aufbaus zur Basis definierten Schwenkwinkels und

• einer Steuer- und Auswerteeinheit (50),

• einer Einheit (2) zum Aufnehmen eines Umgebungsabbildes (22', 26', 22, 26), insbesondere einer Digitalkamera, einer RIM-Kamera oder einem Laserscanmodul,

**dadurch gekennzeichnet, dass**

die Steuer- und Auswerteeinheit (50) derart ausgebildet ist, dass damit das Verfahren nach einem der Ansprüche 1 bis 11 ausführbar ist.

13. Computerprogrammprodukt, das auf einem maschinenlesbaren Träger gespeichert ist, oder Computer-Datensignal, verkörpert durch eine elektromagnetische Welle, mit Programmcode, der geeignet ist, aus einem aufgenommenen Abbild der Umgebung eines geodätischen Vermessungsgeräts (50) nach dem Verfahren nach einem der Ansprüche 1 bis 11 den Positionsversatzes (∆P) und Orientierungsversatz (∆O) des geodätischen Vermessungsgeräts (1) zu bestimmen.

## Claims

1. Method for precisely determining the position offset (∆P) and orientation offset (∆O) of a second deployment (S2), defined by a second position (P2) and a second orientation (O2), in relation to a first deployment (S1), defined by a first position (P1) and a first orientation (O1), of a geodetic surveying device (1), in particular of a theodolite or total station, having a laser rangefinding functionality and an angle measurement functionality, wherein the first deployment (S1) and the second deployment (S2) are situated in the same measurement environment, the position offset (∆P) and orientation offset (∆O) are determined so precisely that the second position (P2) and the second orientation (O2) are determinable with geodetic accuracy; comprising the following steps:

   • recording a second image of the environment (22', 26') of at least a second contiguous region (4', 9', 21', 31') of the measurement environment from the second deployment (S2),

   • matching image elements (24', 25', 28') of the second image of the environment (22', 26') to corresponding image elements (24, 25, 28) of a first image of the environment (22, 26), which was recorded from the first deployment (S1) and images at least one first contiguous region (4, 9, 21, 31) of the measurement environment, wherein the first and the second contiguous regions (4, 9, 21, 31, 4', 9', 21', 31') have a multiplicity of common measurement environment points (30),

• determining, in the internal reference system (L1, L2) of the geodetic surveying device (1), the directions (19, 32, 19', 32') respectively from the first and second deployments (S1, S2) to measurement environment points (30) which correspond to corresponding image elements (24, 25, 28, 24', 25', 28') on the basis of the location of the respective image element (24, 25, 28, 24', 25', 28') in the respective image of the environment (22, 26, 22', 26'),

• determining a scaling factor,

   ▪ by means of a precise, contactless, in particular laser-optical measurement of the distance (D') from the second deployment (S2) to at least one measurement environment point (30) whose direction has been determined, more particularly wherein the precise contactless measurement of the distance (D') is brought about automatically, wherein the geodetic surveying device (1) is automatically aligned on the measurement environment point (30) to be measured on the basis of the determined direction (19, 32, 19', 32'), or

   ▪ by means of an object with known dimensions, in particular a scale bar, imaged in the first and/or second image of the environment

   • precisely determining the position offset (∆P) and the orientation offset (∆O) by means of geometric principles resp. algorithms on the basis of the directions (19, 32, 19', 32') determined in relation to the first and second deployments (S1, S2) and the scaling factor, i.e. the imaging scale.

2. Method according to Claim 1,
   **characterized in that**
   the first position (P1) and the first orientation (O1) are determined precisely in relation to an external reference system (G), in particular the first position (P1) and the first orientation (O1) are precisely georeferenced.

3. Method according to any one of the preceding claims,
   **characterized in that**
   the position offset (∆P) and the orientation offset (∆O) are determined in relation to all six degrees of freedom.

4. Method according to any one of the preceding claims, **characterized by**

- recording a further image of the environment of at least one further contiguous region (9', 21') of the measurement environment from the second deployment (S2), wherein the further contiguous region is specified on the basis of image features which are extracted from the first and/or the second image of the environment, more particularly wherein the further image of the environment has a higher resolution than the second image of the environment, and
- performing the following method steps:

     o matching image elements,
     o determining the directions,
     o determining a scaling factor and
     o precisely determining the position offset ($\Delta$P) and the orientation offset ($\Delta$O)

using the further image of the environment as second image of the environment.

5. Method according to any one of the preceding claims, **characterized in that** an image of the environment (22, 26, 22', 26') is recorded

     - by photography or laser scanning, in particular by registering the reflected laser light intensity, in particular wherein measurement environment points (8,8',8") recorded in the process cover the respective contiguous region (4, 9, 21, 31, 4', 9', 21', 31') of the measurement environment with a predetermined minimum density and/or
     - in relation to a recording direction, which in particular is horizontal relative to an external absolute reference system (G), over an angle of at least 1.5°, in particular at least 45°, specifically at least approximately 360°, in particular as a result of which a panorama image, a panorama 3D scan or a range panorama image is generated as image of the environment (22', 26', 22, 26) .

6. Method according to any one of the preceding claims, **characterized in that** image elements are individual image points, in particular pixels or 3D points of the images of the environment (22, 26, 22', 26'), or image elements are image features (24, 25, 28, 24', 25', 28'), which are extracted from the images of the environment by means of image processing, in particular edge-based and/or region-based segmentation, in particular wherein image features are represented by geometric primitives and/or descriptors.

7. Method according to any one of the preceding claims, **characterized in that** matching of image elements is brought about by means of

     - an iterative matching algorithm, in particular an iterative closest-point algorithm, or
     - a dense matching algorithm, in particular a semi-global matching algorithm, or
     - a sum of squared differences or least squares algorithm, or
     - a feature-based algorithm, in particular on the basis of a scale invariant feature transform algorithm and/or a speeded-up robust features algorithm.

8. Method according to any one of the preceding claims, **characterized in that** position data ($V_{L2}$) of the measured measurement environment points (30), which are determined by means of the laser rangefinding functionality and angle measurement functionality from the second deployment (S2), are transformed on the basis of the determined position offset ($\Delta$P) and orientation offset ($\Delta$O) in such a way that the positions of the measured measurement environment points (30) are available relative to the first position (P1) and first orientation (O1).

9. Method according to any one of the preceding claims, **characterized by** an automatic targeted specification of the second and/or first contiguous region (4', 9', 21', 31') on the basis of approximate position and orientation information.

10. Method according to any one of the preceding claims, **characterized by** transferring the data of the environment images (22', 26', 22, 26) or the image elements (24', 25', 28', 24, 25, 28) and performing method steps externally of the surveying device, in particular on a smartphone or by way of cloud services.

11. Method according to any one of the preceding claims, **characterized by** automated, in particular also automatic, performance of individual method steps, in particular of all method steps.

12. Geodetic surveying device (1), comprising

     - a structure, which is arranged on a base and swivelable about a swivel axis,
     - a sighting unit, wherein the sighting unit has at least one emission unit, defining an optical target axis, for emitting a laser beam and a rangefinding functionality for precisely measuring a distance to an object,
     - an angle measurement functionality for precisely registering at least one swivel angle defined by a relative swivel position of the structure relative to the base and
• a control and evaluation unit (50),
• a unit (2) for recording an environment image (22', 26', 22, 26), in particular a digital camera, an RIM camera or a laser scanning module,

**characterized in that**
the control and evaluation unit (50) is embodied in such a way that the method according to any one of Claims 1 to 11 is implementable therewith.

13. Computer program product, stored on a machine-readable medium, or computer data signal, embodied by an electromagnetic wave, comprising program code suitable to determine the position offset (ΔP) and orientation offset (ΔO) of the geodetic surveying device (1) from a recorded image of the environment of a geodetic surveying device (50) according to the method according to any one of Claims 1 to 11.

## Revendications

1. Procédé pour la détermination précise du décalage de position (ΔP) et du décalage d'orientation (Δ0) d'un second stationnement (S2), défini par une seconde position (P2) et une seconde orientation (O2), par rapport à un premier stationnement (S1), défini par une première position (P1) et une première orientation (O1), d'un appareil de mesure géodésique (1) qui présente une fonctionnalité de mesure de distance par laser et d'une fonctionnalité de mesure d'angle, en particulier d'un théodolite ou d'une station totale, cependant que le premier stationnement (S1) et le second stationnement (S2) se trouvent dans le même environnement de mesure et cependant que la détermination du décalage de position (ΔP) et du décalage d'orientation (Δ0) est effectué de manière précise de telle manière que la seconde position (P2) et la seconde orientation (O2) peuvent être déterminées avec une exactitude géodésique, avec

    • enregistrement d'une seconde image de l'environnement (22', 26') d'au moins une seconde région cohérente (4', 9', 21', 31') de l'environnement de mesure à partir du second stationnement (S2)
    • appariement d'éléments de représentation (24', 25', 28') de la seconde image de l'environnement (22', 26') avec des éléments de représentation correspondants (24, 25, 28) d'une première image de l'environnement (22, 26) qui est enregistrée à partir du premier stationnement (S1) et d'au moins une première région cohérente (4, 9, 21, 31) de l'environnement de mesure, cependant que la première et la seconde région cohérente (1, 9, 21, 31, 4', 9', 21', 31') présentent une multitude de points d'environnement de mesure communs (30),
    • détermination des directions (19, 32, 19', 32') dans le système de référence interne (L1, L2) de l'appareil de mesure géodésique (1) respectivement à partir du premier et du second stationnement (S1, S2) par rapport à des points d'environnement de mesure (30) qui correspondent à des éléments de représentation correspondants (24, 25, 28, 24', 25', 28') à l'aide de la position de l'élément de représentation correspondant (24, 25, 28, 24', 25', 28') dans chaque représentation d'environnement (22, 26, 22', 26'),
    • détermination d'un facteur d'échelle

        • au moyen d'une mesure précis sans contact, en particulier par optique laser de la distance (D'), à partir du second stationnement (S2) par rapport à au moins un point d'environnement de mesure de direction déterminée (30), en particulier cependant que la mesure précise sans contact de la distance (D') se fait automatiquement, cependant que l'appareil de mesure géodésique (1) est aligné automatiquement sur le point d'environnement de mesure à mesurer (30) à l'aide de la direction déterminée (19, 32, 19', 32') ou
        • au moyen d'un objet de dimension connue représenté dans la première et/ou la seconde représentation d'environnement, en particulier d'une barre de mesure,

    • détermination précise du décalage de position (ΔP) et du décalage d'orientation (Δ0) au moyen de principes géométriques ou d'algorithmes à l'aide des directions (19, 32, 19', 32') déterminées par référence au premier et au second stationnement (S1, S2) et du facteur d'échelle, c'est-à-dire de l'échelle de représentation.

2. Procédé selon la revendication 1,
    **caractérisé en ce que**
    la première position (P1) et la première orientation (O1) sont déterminées précisément en référence à un système de références externe (G), in particulier la première position (P1) et la première orientation (O1) sont géoréférencées précisément.

3. Procédé selon l'une des revendications précédentes,
    **caractérisé en ce que**
    le décalage de position (ΔP) et le décalage d'orientation (Δ0) sont déterminés en référence à tous les six degrés de liberté.

**4.** Procédé selon l'une des revendications précédentes,
**caractérisé par**

• l'enregistrement d'une autre représentation d'environnement d'au moins une autre région cohérente (9', 21') de l'environnement de mesure à partir du second stationnement (S2), cependant que l'autre région cohérence est spécifiée à l'aide de caractéristiques de représentation qui sont extraites de la première et/ou de la seconde représentation d'environnement, en particulier cependant que l'autre représentation d'environnement a une plus haute résolution que la seconde représentation d'environnement et
• exécution des étapes de procédé

o appariement d'éléments de représentation,
o détermination des directions,
o détermination d'un facteur d'échelle et
o détermination précise du décalage de position ($\Delta$P) et du décalage d'orientation ($\Delta$0) en utilisant une autre représentation d'environnement comme seconde représentation d'environnement.

**5.** Procédé selon l'une des revendications précédentes,
**caractérisé en ce que**
l'enregistrement d'une représentation d'environnement (22, 26, 22', 26')

• est effectué par photographie ou scannage laser, en particulier avec détection de l'intensité de la lumière laser réfléchie, en particulier cependant que des points d'environnement de mesure ainsi enregistrés (8, 8', 8") couvrent la région cohérente respective (4, 9, 21, 31, 4', 9', 21', 31') de l'environnement de mesure avec une densité minimale prédéterminée et/ou
• est effectué en référence à une direction d'enregistrement, en particulier horizontale par rapport à un système de référence absolu externe, par un angle d'au moins 1,5°, en particulier d'au moins 45°, tout particulièrement d'au moins approximativement 360°, en particulier cependant qu'une image panoramique, un scan panoramique 3D ou une image panorama range, est générée comme représentation d'environnement (22, 26, 22', 26').

**6.** Procédé selon l'une des revendications précédentes,
**caractérisé en ce que**
des éléments de représentation sont des points de représentation individuels, en particulier des pixels, ou des points 3D des représentations d'environnement (22, 26, 22', 26') ou des éléments de représentation sont des caractéristiques de représentation (24, 25, 28, 24', 25', 28') qui sont extraites des représentations d'environnement au moyen de traitement de représentations, en particulier de segmentation basée sur des arêtes et/ou des régions, en particulier cependant que des caractéristiques de représentation sont représentées par des primitives et/ou des descripteurs géométriques.

**7.** Procédé selon l'une des revendications précédentes,
**caractérisé en ce que**
l'appariement des éléments de représentation se fait au moyen

• d'un algorithme d'appariement itératif, en particulier d'un algorithme ICP ou
• d'un algorithme d'appariement dense, en particulier d'un algorithme SGM ou
• d'un algorithme de sommes des différences au carré ou des moindres carrés ou
• d'un algorithme basé sur les caractéristiques, en particulier sur la base d'un algorithme SIFT et/ou d'un algorithme SURF.

**8.** Procédé selon l'une des revendications précédentes,
**caractérisé en ce**
**qu'**une transformation de données de position ($\underline{V}_{L2}$) de points d'environnement mesurés (30) qui sont déterminés au moyen de la fonctionnalité de mesure de distance par laser et de la fonctionnalité de mesure d'angle à partir du deuxième stationnement (S2) se fait à l'aide du décalage déterminé de position ($\Delta$P) et d'orientation ($\Delta$0) de telle manière que les positions des points d'environnement mesurés (30) sont disponibles par rapport à la première position (P1) et à la première orientation (O1).

**9.** Procédé selon l'une des revendications précédentes,
**caractérisé par**
spécification ciblée automatique de la seconde et/ou de la première région cohérente (4', 9', 21', 31') à l'aide d'informations approximatives de position et d'orientation.

**10.** Procédé selon l'une des revendications précédentes,
**caractérisé par**
un transfert des données des représentations d'environnement (22, 26, 22', 26') ou des éléments de représentation (24', 25', 28', 24, 25, 28) et de l'exécution par un appareil de mesure externe d'étapes de procédé, en particulier sur un smartphone ou par des services cloud.

**11.** Procédé selon l'une des revendications précédentes,

**caractérisé par**

une exécution automatisée, en particulier aussi automatique, d'étapes de procédé individuelles, en particulier de toutes les étapes de procédé.

**12.** Appareil de mesure géodésique (1) avec

• une structure pivotante autour d'un axe de pivotement, placée sur une base,
• une unité de visée, cependant que l'unité de visée présente au moins une unité d'émission qui définit un axe de visée optique pour l'émission d'un faisceau laser et une fonctionnalité de mesure de distance pour la mesure précise d'une distance par rapport à un objet,
• une fonctionnalité de mesure d'angle pour la détection précise d'au moins un angle de pivotement défini par une position de pivotement relative de la structure par rapport à la base et
• une unité de commande et d'évaluation (50),
• une unité (2) pour enregistrer une représentation d'environnement (22', 26', 22, 26), en particulier une caméra numérique, une caméra RIM ou un module de scanner laser,

**caractérisé en ce que**

l'unité de commande et d'évaluation (50') est configurée de telle manière qu'elle permet l'exécution du procédé selon l'une des revendications 1 à 11.

**13.** Produit programme d'ordinateur qui est mémorisé sur un support lisible par machine ou signal de données d'ordinateur, matérialisé par une onde électromagnétique, avec un code de programme qui est approprié pour déterminer à partir d'une représentation enregistrée de l'environnement d'un appareil de mesure géodésique (50), selon l'une des revendications 1 à 11, le décalage de position ($\Delta P$) et d'orientation ($\Delta 0$) de l'appareil de mesure géodésique (1).

$$\Delta P = \Delta x + \Delta y + \Delta z$$

*Fig 1*

*Fig 2a*

*Fig 2b*

Fig 3a

Fig 3b

Fig 3c

Fig 3d

Fig 3e

Fig 4a

Fig 4b

Fig 5

$$\underline{V}_{L2}(x',y',z') \xrightarrow{\quad \underline{t}_1, \underline{\underline{R}}^{L1}_{L2} \quad} \underline{V}_{L1}(x,y,z) \xrightarrow{\quad \underline{t}_2, \underline{\underline{R}}^{G}_{L1} \quad} \underline{V}_{G}(E,N,h)$$

Fig 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1517116 A1
- DE 10308525 A1
- US 20020126895 A1
- EP 12153163 A
- EP 13175115
- EP 2591314 A
- US 20130243250 A1